# EUROPEAN PATENT APPLICATION

(11) **EP 4 622 199 A1**
(43) Date of publication of application: **24.09.2025**
(21) Application number: 22967563.2
(22) Date of filing: 07.12.2022
(51) Int. Cl.: H04L 27/00

(54) **BLOCKCHAIN ESTABLISHMENT METHOD AND COMMUNICATION APPARATUS**

(71) Applicant: Huawei Technologies Co., Ltd., Shenzhen, Guangdong 518129 (CN)
(72) Inventor: WANG, Donghui, Shenzhen, Guangdong 518129 (CN); LIU, Fei, Shenzhen, Guangdong 518129 (CN); SONG, Yurong, Shenzhen, Guangdong 518129 (CN); HE, Fengjiao, Shenzhen, Guangdong 518129 (CN)
(74) Representative: Goddar, Heinz J.
(86) International application number: PCT/CN2022/137276
(87) International publication number: WO 2024/119403

(57) **Abstract**

This application provides a blockchain establishment method and a communication apparatus, to implement blockchain deployment based on a large-scale underlying node in a 6G network, and may be applied to a 6G system. The method includes: A first ledger anchor function LAF network element obtains chain establishment requirement information of a first blockchain, and sends first indication information to a second LAF network element corresponding to a first network area, where the chain establishment requirement information is used to determine a requirement of the first blockchain, the first indication information is determined based on the chain establishment requirement information, and the first indication information indicates a requirement of the first blockchain in the first network area.

## Description

### TECHNICAL FIELD

Embodiments of this application relate to the communication field, and in particular, to a blockchain establishment method and a communication apparatus.

### BACKGROUND

A blockchain (blockchain, BC) is a distributed ledger integrating a plurality of technologies such as a cryptography technology, a peer-to-peer (peer-to-peer, P2P) network, and a distributed database. As an open and transparent decentralization technology, the blockchain respectively transforms a center of authority and central trust that are conventional into a group consensus and decentralized trust, and constructs a tamper-proof distributed ledger that is guaranteed by using the cryptography technology and that cannot be tampered with.

Currently, although a blockchain is independent of network evolution, the blockchain can well meet network security requirements due to tamper-proof, consensus-based, and distributed features. Therefore, currently, the blockchain is usually used as an independent distributed storage and bypasses a network function. However, in the 6th generation (6th generation, 6G) era, a blockchain is to be converged with a 6G network. An important evolution direction is to use the 6G network as an infrastructure of the blockchain (that is, 6G blockchain as a service (blockchain as a service, BAAS)), so that the blockchain can be constructed and configured based on the 6G network, and serve the 6G network.

Currently, in the research of the 6G BAAS, it is proposed that a ledger anchor function (ledger anchor function, LAF) is used as a bridge between a service chain and a 6G network infrastructure, that is, the LAF is used as a control node to perform functions such as blockchain management, enabler registration management, or chain creation. However, how to use the LAF to create a blockchain based on a large-scale underlying node in the 6G network is still an urgent problem to be resolved currently.

### SUMMARY

Embodiments of this application provide a blockchain establishment method and a communication apparatus, to implement blockchain deployment based on a large-scale underlying node in a 6G network.

To achieve the foregoing objectives, the following technical solutions are used in embodiments of this application.

According to a first aspect, a blockchain establishment method is provided. The method may be performed by a first LAF network element, or may be performed by a component of the first LAF network element, for example, a processor, a chip, or a chip system of the first LAF network element, or may be implemented by a logical module or software that can implement all or some functions of the first LAF network element. An example in which the method is performed by the first LAF network element is used below for description. The method includes: The first LAF network element obtains chain establishment requirement information of a first blockchain. The first LAF network element sends first indication information to a second LAF network element corresponding to a first network area, where the first indication information is determined based on the chain establishment requirement information, and the first indication information indicates a requirement of the first blockchain in the first network area.

According to the blockchain establishment method according to the first aspect, the first LAF network element and the second LAF network element are deployed hierarchically to manage a blockchain, so that the first LAF network element decomposes a requirement based on the obtained chain establishment requirement information, and sends a decomposed requirement to the second LAF network element through the first indication information, to establish the first blockchain in the first network area managed by the second LAF network element. In other words, the first LAF network element may locate, based on decomposition of the chain establishment requirement information, a chain establishment requirement from a large-scale communication network to a small-scale network area, to implement blockchain creation and management. This can reduce possible single-point blocking caused by management performed by only a single control node when a blockchain is created based on the large-scale communication network, thereby reducing blockchain establishment complexity.

In a possible design solution, the blockchain establishment method provided in this embodiment of this application may further include: The first LAF network element receives second indication information from the second LAF network element, where the second indication information indicates one or more first nodes configured to establish the first blockchain in the first network area. In this way, the first LAF network element may learn of information about the one or more first nodes configured to establish the first blockchain in the first network area, to perform summary management on the nodes that create the first blockchain.

In a possible design solution, the blockchain establishment method provided in this embodiment of this application may further include: The first LAF network element sends a first configuration request to the second LAF network element, where the first configuration request includes information about one or more second nodes, the second node is configured to communicate with the one or more first nodes configured to establish the first blockchain in the first network area, and the second node is a node in a network area other than the first network area, and is configured to establish the first blockchain. In this way, in a scenario in which the first blockchain is created across domains, communication between the first node in the first network area and the node in the network area other than the first network area can be implemented, to implement cross-domain communication between blockchain nodes.

The blockchain establishment method provided in this embodiment of this application may further include: The first LAF network element receives a first configuration response from the second LAF network element, where the first configuration response notifies a cross-domain communication configuration result of the one or more first nodes. In this way, in a scenario in which the first blockchain is created across domains, after configuring cross-domain communication between nodes in the first network area, the first LAF network element may further obtain a cross-domain communication configuration result from the second LAF network element through the first configuration response, to determine whether cross-domain communication succeeds.

In a possible design solution, the blockchain establishment method provided in this embodiment of this application may further include: The first LAF network element receives third indication information from the second LAF network element, where the third indication information indicates a blockchain capability in the first network area. In this way, the first LAF network element may further perform statistics update on the blockchain capability in the first network area through the third indication information.

In a possible design solution, the blockchain establishment method provided in this embodiment of this application may further include: The first LAF network element sends fourth indication information to the second LAF network element, where the fourth indication information indicates the second LAF network element to deploy a blockchain capability for one or more fifth nodes in the first network area, and the fifth node is a node that does not have a blockchain capability in the first network area. In this way, the first LAF network element may indicate the second LAF network element to deploy a blockchain capability for a node that does not have a blockchain capability in a network area in which the second LAF network element is located, to improve the blockchain capability in the network area.

Optionally, the first indication information may include at least one of the following: a quantity of nodes needed by the first blockchain in the first network area, a node type needed by the first blockchain in the first network area, or a node capability needed by the first blockchain in the first network area.

Optionally, the second indication information may include at least one of the following: a quantity of first nodes, a type of the first node, or node information of one or more third nodes, and the third node is a node that is in the one or more first nodes and that communicates with a node configured to establish the first blockchain in a network area other than the first network area.

Optionally, the node information of the third node may include at least one of the following: an identifier of the third node on the first blockchain, an internet protocol IP address of the third node, public key information of the third node, certificate information of the third node, or a type of the third node on the first blockchain.

According to a second aspect, a blockchain establishment method is provided. The method may be performed by a second LAF network element, or may be performed by a component of the second LAF network element, for example, a processor, a chip, or a chip system of the second LAF network element, or may be implemented by a logical module or software that can implement all or some functions of the second LAF network element. An example in which the method is performed by the second LAF network element is used below for description. The method includes: The second LAF network element receives first indication information from a first LAF network element, where the first indication information indicates a requirement of a first blockchain in a first network area, and the second LAF network element is an LAF network element corresponding to the first network area. The second LAF network element determines, based on the first indication information in the first network area, one or more first nodes configured to establish the first blockchain.

According to the blockchain establishment method according to the second aspect, the first LAF network element and the second LAF network element are deployed hierarchically to manage a blockchain, so that the second LAF network element can create and manage the first blockchain from a large-scale communication network to a small-scale network area based on the first indication information. This can reduce possible single-point blocking caused by management performed by only a single control node when a blockchain is created based on the large-scale communication network, thereby reducing blockchain establishment complexity.

In a possible design solution, the blockchain establishment method provided in this embodiment of this application may further include: The second LAF network element sends second indication information to the first LAF network element, where the second indication information indicates the one or more first nodes configured to establish the first blockchain in the first network area. In this way, the second LAF network element may report, to the first LAF network element, information about the nodes that are determined in the first network area and that are configured to establish the first blockchain, so that the first LAF network element performs summary management on the nodes that create the first blockchain.

In a possible design solution, the blockchain establishment method provided in this embodiment of this application may further include: The second LAF network element receives a first configuration request from the first LAF network element, where the first configuration request includes information about one or more second nodes, the second node is configured to communicate with the one or more first nodes, and the second node is a node in a network area other than the first network area, and is configured to establish the first blockchain. In this way, the second LAF network element may configure, based on the first configuration request, communication between the first node in the first network area and the node in the network area other than the first network area, to implement cross-domain communication between blockchain nodes.

The blockchain establishment method provided in this embodiment of this application may further include: The second LAF network element sends a first configuration response to the first LAF network element, where the first configuration response notifies a cross-domain communication configuration result of the one or more first nodes. In this way, after configuring the node in the first network area to perform cross-domain communication, the second LAF network element may further notify the first LAF network element of a cross-domain communication configuration result of the node in the first network area, to determine whether cross-domain communication succeeds.

In a possible design solution, the blockchain establishment method provided in this embodiment of this application may further include: The second LAF network element sends a second configuration request to the first node, where the second configuration request is used to configure and activate a blockchain capability of the first node. In this way, after determining, in the first network area managed by the second LAF network element, the first node configured to establish the first blockchain, the second LAF network element may configure and activate the blockchain capability of the first node, so that the first node performs a corresponding blockchain function on the first blockchain.

The blockchain establishment method provided in this embodiment of this application may further include: The second LAF network element receives a second configuration response from the first node, where the second configuration response notifies a blockchain capability configuration result of the first node. In this way, after configuring and activating the blockchain capability of the first node, the second LAF network element may further obtain a blockchain configuration result of the first node, to determine whether the blockchain capability of the node is successfully configured.

In a possible design solution, the blockchain establishment method provided in this embodiment of this application may further include: The second LAF network element sends a third configuration request to a fourth node, where the third configuration request includes information about one or more first nodes other than the fourth node in the plurality of first nodes, the fourth node is any one of the plurality of first nodes, and the information about the one or more first nodes other than the fourth node in the plurality of first nodes is used by the fourth node to communicate with the one or more first nodes other than the fourth node in the plurality of first nodes. In this way, the second LAF may further configure communication between nodes in the first network area, to implement mutual communication between nodes in a same network area.

The blockchain establishment method provided in this embodiment of this application may further include: The second LAF receives a third configuration response from the fourth node, where the third configuration response notifies an intra-domain communication configuration result of the fourth node. In this way, after configuring an intra-domain node for communication, the second LAF network element may further obtain a communication configuration result of the intra-domain node, to determine whether intra-domain communication succeeds.

In a possible design solution, the blockchain establishment method provided in this embodiment of this application may further include: The second LAF network element sends third indication information to the first LAF network element, where the third indication information indicates a blockchain capability in the first network area. In this way, the second LAF network element may further report the blockchain capability in the first network area to the first LAF network element through the third indication information, so that the first LAF network element collects statistics about and updates the blockchain capability in the first network area.

In a possible design solution, the blockchain establishment method provided in this embodiment of this application may further include: The second LAF network element receives fourth indication information from the first LAF network element, where the fourth indication information indicates the second LAF network element to deploy a blockchain capability for one or more fifth nodes in the first network area, and the fifth node is a node that does not have a blockchain capability in the first network area. In this way, the second LAF network element may deploy, based on triggering of the first LAF network element, a blockchain capability for a node that does not have a blockchain capability in a network area in which the second LAF network element is located, to improve the blockchain capability in the network area.

In a possible design solution, the blockchain establishment method provided in this embodiment of this application may further include: The second LAF network element receives a first request from the fifth node, where the first request is used to request the second LAF network element to deploy a blockchain capability, and the fifth node is a node that does not have a blockchain capability in the first network area. In this way, the second LAF network element may also trigger, based on a request of a node that does not have a blockchain capability in the first network area, deployment of a blockchain capability of the node, to improve the blockchain capability in the network area.

In a possible design solution, the blockchain establishment method provided in this embodiment of this application may further include: The second LAF network element sends first information to the fifth node, where the first information is used by the fifth node to deploy a blockchain capability, and the fifth node is a node that does not have a blockchain capability in the first network area. In this way, the second LAF network element may further actively trigger deployment of a blockchain capability for a node that does not have a blockchain capability in a network area in which the second LAF network element is located, to improve the blockchain capability in the network area.

Optionally, the first indication information may include at least one of the following: a quantity of nodes needed by the first blockchain in the first network area, a node type needed by the first blockchain in the first network area, or a node capability needed by the first blockchain in the first network area.

Optionally, the second indication information may include at least one of the following: a quantity of first nodes, a type of the first node, or node information of one or more third nodes, and the third node is a node that is in the one or more first nodes and that communicates with a node configured to establish the first blockchain in a network area other than the first network area.

Optionally, the node information of the third node may include at least one of the following: an identifier of the third node on the first blockchain, an internet protocol IP address of the third node, public key information of the third node, certificate information of the third node, or a type of the third node on the first blockchain.

According to a third aspect, a blockchain establishment method is provided. The method may be performed by a third LAF network element, or may be performed by a component of the third LAF network element, for example, a processor, a chip, or a chip system of the third LAF network element, or may be implemented by a logical module or software that can implement all or some functions of the third LAF network element. An example in which the method is performed by the third LAF network element is used below for description. The method includes: The third LAF network element obtains first chain establishment requirement information of a first blockchain, where the third LAF network element is one of N LAF network elements that jointly create the first blockchain, and N is a positive integer greater than 1. The third LAF network element sends, according to a blockchain creation policy, second chain establishment requirement information to at least one LAF network element other than the third LAF network element in the N LAF network elements.

According to the blockchain establishment method according to the third aspect, in a scenario in which the first blockchain is jointly established in a network area in which the N LAF network elements are located, the third LAF network element that obtains the first chain establishment requirement information in the N LAF network elements may determine, according to the blockchain establishment policy, how to select a chain establishment requirement with an LAF network element other than the third LAF network element in the N LAF network elements, to implement distributed chain establishment.

In a possible design solution, that the third LAF network element obtains first chain establishment requirement information of a first blockchain may include: The third LAF network element receives the first chain establishment requirement information of the first blockchain from the first LAF network element, where the first LAF network element is configured to manage the N LAF network elements. In this way, the N LAF network elements may be sub-LAF network elements distributed in different network areas in a same operator network, or may be slice-level sub-LAF network elements distributed in different function domains in a same network slice. Therefore, the third LAF network element may obtain the first chain establishment requirement information of the first blockchain from an upper-level LAF network element (namely, the first LAF network element) that manages the third LAF network element.

In a possible design solution, the second chain establishment requirement information may be the first chain establishment requirement information. In other words, the second chain establishment requirement information is the same as the first chain establishment requirement information.

In a possible design solution, the blockchain creation policy may be that each of the N LAF network elements selects equivalent chain establishment requirement information from the first chain establishment requirement information to create a blockchain. In this embodiment of this application, equivalently and equally dividing the first chain establishment requirement information includes equally dividing a total quantity of nodes that establish the first blockchain and evenly dividing capabilities of the nodes that establish the first blockchain. Therefore, according to an equal division principle, the third LAF network element may send, in a broadcast manner, the first chain establishment requirement information to all LAF network elements except the third LAF network element in the N LAF network elements, so that the N LAF network elements select corresponding chain establishment requirement information for the first chain establishment requirement information in an equivalent and equal division manner.

In a possible design solution, that the third LAF network element sends, according to a blockchain creation policy, second chain establishment requirement information to at least one LAF network element other than the third LAF network element in the N LAF network elements may include: The third LAF network element sends the second chain establishment requirement information to a fourth LAF network element according to the blockchain creation policy, where the fourth LAF network element is an LAF network element that preferentially selects chain establishment requirement information from the first chain establishment requirement information in the N LAF network elements. In this way, in a scenario in which the N LAF network elements select corresponding chain establishment requirement information from the first chain establishment requirement information in a priority sequence, and the third LAF network element is not an LAF network element with a highest priority in the N LAF network elements, the second chain establishment requirement information is also the same as the first chain establishment requirement information.

In another possible design solution, the second chain establishment requirement information may be chain establishment requirement information other than third chain establishment requirement information in the first chain establishment requirement information, and the third chain establishment requirement information is some chain establishment requirement information selected by the third LAF network element from the first chain establishment requirement information according to a blockchain creation policy. That is, the second chain establishment requirement information is different from the first chain establishment requirement information.

In a possible design solution, that the third LAF network element sends, according to a blockchain creation policy, second chain establishment requirement information to at least one LAF network element other than the third LAF network element in the N LAF network elements may include: The third LAF network element sends the second chain establishment requirement information to a fifth LAF network element according to the blockchain creation policy, where the fifth LAF network element is a next LAF network element that selects chain establishment requirement information in the N LAF network elements. In this way, in a scenario in which the N LAF network elements select corresponding chain establishment requirement information from the first chain establishment requirement information in a priority sequence, and the third LAF network element is an LAF network element with a highest priority in the N LAF network elements, the second chain establishment requirement information is different from the first chain establishment requirement information.

Optionally, the blockchain creation policy may be creating a blockchain in a sequence of capabilities of LAF network elements or creating a blockchain based on a blockchain capability in a network area corresponding to an LAF network element.

Optionally, the blockchain creation policy may be preconfigured by an operator, may be obtained by the N LAF network elements through negotiation, may be generated based on a blockchain consensus, or may be determined based on a common operation.

According to a fourth aspect, a communication apparatus is provided, to implement the foregoing methods. The communication apparatus may be the first LAF network element in the first aspect, or an apparatus including the first LAF network element, or an apparatus, for example, a chip, included in the first LAF network element. The communication apparatus includes a corresponding module, unit, or means (means) for implementing the foregoing method according to the first aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The processing module is configured to obtain chain establishment requirement information of a first blockchain. The transceiver module is configured to send first indication information to a second LAF network element corresponding to a first network area, where the first indication information is determined based on the chain establishment requirement information, and the first indication information indicates a requirement of the first blockchain in the first network area.

In a possible design solution, the transceiver module is further configured to receive second indication information from the second LAF network element, where the second indication information indicates one or more first nodes configured to establish the first blockchain in the first network area.

In a possible design solution, the transceiver module is further configured to send a first configuration request to the second LAF network element, where the first configuration request includes information about one or more second nodes, the second node is configured to communicate with the one or more first nodes configured to establish the first blockchain in the first network area, and the second node is a node in a network area other than the first network area, and is configured to establish the first blockchain.

The transceiver module is further configured to receive a first configuration response from the second LAF network element, where the first configuration response notifies a cross-domain communication configuration result of the one or more first nodes.

In a possible design solution, the transceiver module is further configured to receive third indication information from the second LAF network element, where the third indication information indicates a blockchain capability in the first network area.

In a possible design solution, the transceiver module is further configured to send fourth indication information to the second LAF network element, where the fourth indication information indicates the second LAF network element to deploy a blockchain capability for one or more fifth nodes in the first network area, and the fifth node is a node that does not have a blockchain capability in the first network area.

Optionally, the first indication information may include at least one of the following: a quantity of nodes needed by the first blockchain in the first network area, a node type needed by the first blockchain in the first network area, or a node capability needed by the first blockchain in the first network area.

Optionally, the second indication information may include at least one of the following: a quantity of first nodes, a type of the first node, or node information of one or more third nodes, and the third node is a node that is in the one or more first nodes and that communicates with a node configured to establish the first blockchain in a network area other than the first network area.

Optionally, the node information of the third node may include at least one of the following: an identifier of the third node on the first blockchain, an internet protocol IP address of the third node, public key information of the third node, certificate information of the third node, or a type of the third node on the first blockchain.

Optionally, the transceiver module may include a receiving module and a sending module. The sending module is configured to implement a sending function of the communication apparatus according to the fourth aspect, and the receiving module is configured to implement a receiving function of the communication apparatus according to the fourth aspect.

Optionally, the communication apparatus according to the fourth aspect may further include a storage module, and the storage module stores a program or instructions. When the processing module executes the program or the instructions, the communication apparatus according to the fourth aspect is enabled to perform the method according to the first aspect.

For technical effects of the communication apparatus according to the fourth aspect, refer to the technical effects of the method according to the first aspect. Details are not described herein again.

According to a fifth aspect, a communication apparatus is provided to implement the foregoing methods. The communication apparatus may be the second LAF network element in the second aspect, or an apparatus including the second LAF network element, or an apparatus, for example, a chip, included in the second LAF network element. The communication apparatus includes a corresponding module, unit, or means (means) for implementing the foregoing method according to the second aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The transceiver module is configured to receive first indication information from a first LAF network element, where the first indication information indicates a requirement of a first blockchain in a first network area, and the second LAF network element is an LAF network element corresponding to the first network area. The processing module is configured to determine, in the first network area based on the first indication information, one or more first nodes configured to establish the first blockchain.

In a possible design solution, the transceiver module is further configured to send second indication information to the first LAF network element, where the second indication information indicates the one or more first nodes configured to establish the first blockchain in the first network area.

In a possible design solution, the transceiver module is further configured to receive a first configuration request from the first LAF network element, where the first configuration request includes information about one or more second nodes, the second node is configured to communicate with the one or more first nodes, and the second node is a node in a network area other than the first network area, and is configured to establish the first blockchain.

The transceiver module is further configured to send a first configuration response to the first LAF network element, where the first configuration response notifies a cross-domain communication configuration result of the one or more first nodes.

In a possible design solution, the transceiver module is further configured to send a second configuration request to the first node, where the second configuration request is used to configure and activate a blockchain capability of the first node.

The transceiver module is further configured to receive a second configuration response from the first node, where the second configuration response notifies a blockchain capability configuration result of the first node.

In a possible design solution, the transceiver module is further configured to send a third configuration request to a fourth node, where the third configuration request includes information about one or more first nodes other than the fourth node in the plurality of first nodes, the fourth node is any one of the plurality of first nodes, and the information about the one or more first nodes other than the fourth node in the plurality of first nodes is used by the fourth node to communicate with the one or more first nodes other than the fourth node in the plurality of first nodes.

The transceiver module is further configured to receive a third configuration response from the fourth node, where the third configuration response notifies an intra-domain communication configuration result of the fourth node.

In a possible design solution, the transceiver module is further configured to send third indication information to the first LAF network element, where the third indication information indicates a blockchain capability in the first network area.

In a possible design solution, the transceiver module is further configured to receive fourth indication information from the first LAF network element, where the fourth indication information indicates the second LAF network element to deploy a blockchain capability for one or more fifth nodes in the first network area, and the fifth node is a node that does not have a blockchain capability in the first network area.

In a possible design solution, the transceiver module is further configured to receive a first request from the fifth node, where the first request is used to request the second LAF network element to deploy a blockchain capability, and the fifth node is a node that does not have a blockchain capability in the first network area.

In a possible design manner, the transceiver module is further configured to send first information to the fifth node, where the first information is used by the fifth node to deploy a blockchain capability, and the fifth node is a node that does not have a blockchain capability in the first network area.

Optionally, the first indication information may include at least one of the following: a quantity of nodes needed by the first blockchain in the first network area, a node type needed by the first blockchain in the first network area, or a node capability needed by the first blockchain in the first network area.

Optionally, the second indication information may include at least one of the following: a quantity of first nodes, a type of the first node, or node information of one or more third nodes, and the third node is a node that is in the one or more first nodes and that communicates with a node configured to establish the first blockchain in a network area other than the first network area.

Optionally, the node information of the third node may include at least one of the following: an identifier of the third node on the first blockchain, an internet protocol IP address of the third node, public key information of the third node, certificate information of the third node, or a type of the third node on the first blockchain.

Optionally, the transceiver module may include a receiving module and a sending module. The sending module is configured to implement a sending function of the communication apparatus according to the fifth aspect, and the receiving module is configured to implement a receiving function of the communication apparatus according to the fifth aspect.

Optionally, the communication apparatus according to the fifth aspect may further include a storage module, and the storage module stores a program or instructions. When the processing module executes the program or the instructions, the communication apparatus according to the fifth aspect is enabled to perform the method according to the second aspect.

For technical effects of the communication apparatus according to the fifth aspect, refer to the technical effects of the method according to the first aspect. Details are not described herein again.

According to a sixth aspect, a communication apparatus is provided to implement the foregoing methods. The communication apparatus may be the third LAF network element in the third aspect, or an apparatus including the third LAF network element, or an apparatus, for example, a chip, included in the third LAF network element. The communication apparatus includes a corresponding module, unit, or means (means) for implementing the foregoing method according to the third aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The processing module is configured to obtain first chain establishment requirement information of a first blockchain, where the third LAF network element is one of N LAF network elements that jointly create the first blockchain, and N is a positive integer greater than 1. The transceiver module is configured to send, according to a blockchain creation policy, second chain establishment requirement information to at least one LAF network element other than the third LAF network element in the N LAF network elements.

In a possible design solution, that the processing module is configured to obtain first chain establishment requirement information of a first blockchain may include: The processing module is configured to receive the first chain establishment requirement information of the first blockchain from a first LAF network element through the transceiver module, where the first LAF network element is configured to manage the N LAF network elements.

In a possible design solution, the second chain establishment requirement information may be the first chain establishment requirement information.

In a possible design solution, the blockchain creation policy may be that each of the N LAF network elements selects equivalent chain establishment requirement information from the first chain establishment requirement information to create a blockchain.

In a possible design solution, that the transceiver module is configured to send, according to a blockchain creation policy, second chain establishment requirement information to at least one LAF network element other than the third LAF network element in the N LAF network elements may include: The transceiver module is configured to send the second chain establishment requirement information to a fourth LAF network element according to the blockchain creation policy, where the fourth LAF network element is an LAF network element that preferentially selects chain establishment requirement information from the first chain establishment requirement information in the N LAF network elements.

In another possible design solution, the second chain establishment requirement information may be chain establishment requirement information other than third chain establishment requirement information in the first chain establishment requirement information, and the third chain establishment requirement information is some chain establishment requirement information selected by the third LAF network element from the first chain establishment requirement information according to a blockchain creation policy.

In a possible design solution, that the transceiver module is configured to send, according to a blockchain creation policy, second chain establishment requirement information to at least one LAF network element other than the third LAF network element in the N LAF network elements may include: The transceiver module is configured to send the second chain establishment requirement information to a fifth LAF network element according to the blockchain creation policy, where the fifth LAF network element is a next LAF network element that selects chain establishment requirement information in the N LAF network elements.

Optionally, the blockchain creation policy may be creating a blockchain in a sequence of capabilities of LAF network elements or creating a blockchain based on a blockchain capability in a network area corresponding to an LAF network element.

Optionally, the blockchain creation policy may be preconfigured by an operator, may be obtained by the N LAF network elements through negotiation, may be generated based on a blockchain consensus, or may be determined based on a common operation.

Optionally, the transceiver module may include a receiving module and a sending module. The sending module is configured to implement a sending function of the communication apparatus according to the sixth aspect, and the receiving module is configured to implement a receiving function of the communication apparatus according to the sixth aspect.

Optionally, the communication apparatus according to the sixth aspect may further include a storage module, and the storage module stores a program or instructions. When the processing module executes the program or the instructions, the communication apparatus according to the sixth aspect is enabled to perform the method according to the third aspect.

For technical effects of the communication apparatus according to the sixth aspect, refer to the technical effects of the method according to the third aspect. Details are not described herein again.

According to a seventh aspect, a communication apparatus is provided, and includes a processor and a communication interface. The communication interface is configured to communicate with a module outside the communication apparatus. The processor is configured to execute a computer program or instructions, to enable the communication apparatus to perform the method according to any one of the foregoing aspects. The communication apparatus may be the first LAF network element in the first aspect, or an apparatus including the first LAF network element, or an apparatus, for example, a chip, included in the first LAF network element. Alternatively, the communication apparatus may be the second LAF network element in the second aspect, or an apparatus including the second LAF network element, or an apparatus, for example, a chip, included in the second LAF network element. Alternatively, the communication apparatus may be the third LAF network element in the third aspect, or an apparatus including the third LAF network element, or an apparatus, for example, a chip, included in the third LAF network element.

According to an eighth aspect, a communication apparatus is provided, and includes at least one processor. The processor is configured to execute a computer program or instructions stored in a memory, to enable the communication apparatus to perform the method according to any one of the foregoing aspects. The memory may be coupled to the processor, or may be independent of the processor. The communication apparatus may be the first LAF network element in the first aspect, or an apparatus including the first LAF network element, or an apparatus, for example, a chip, included in the first LAF network element. Alternatively, the communication apparatus may be the second LAF network element in the second aspect, or an apparatus including the second LAF network element, or an apparatus, for example, a chip, included in the second LAF network element. Alternatively, the communication apparatus may be the third LAF network element in the third aspect, or an apparatus including the third LAF network element, or an apparatus, for example, a chip, included in the third LAF network element.

According to a ninth aspect, a communication apparatus is provided (for example, the communication apparatus may be a chip or a chip system). The communication apparatus includes a processor, configured to implement the function in any one of the foregoing aspects.

In some possible designs, the communication apparatus includes a memory, and the memory is configured to store necessary program instructions and/or data.

Optionally, the processor may be integrated with the memory.

In some possible designs, when the apparatus is a chip system, the apparatus may include a chip, or may include a chip and another discrete component.

According to a tenth aspect, a communication apparatus is provided, and includes a transceiver and a processor. The transceiver is configured to exchange information between the communication apparatus and another communication apparatus, and the processor executes program instructions to perform the method according to any one of the first aspect to the third aspect.

In a possible design solution, the communication apparatus according to the eleventh aspect may further include a memory. The memory may be integrated with the processor, or may be separately disposed. The memory may be configured to store a computer program and/or data in the method according to any one of the first aspect to the third aspect.

According to an eleventh aspect, a communication apparatus is provided. The communication apparatus is configured to perform the method according to any one of the implementations of the first aspect to the third aspect.

In this application, the communication apparatus according to the eleventh aspect may be the first LAF network element in the first aspect, the second LAF network element in the second aspect, or the third LAF network element in the third aspect, or a chip (system) or another component part or component that may be disposed in the first LAF network element, the second LAF network element, or the third LAF network element, or an apparatus including the first LAF network element, the second LAF network element, or the third LAF network element.

It should be understood that the communication apparatus according to the eleventh aspect includes a corresponding module, unit, or means (means) for implementing the method according to any one of the first aspect to the third aspect. The module, unit, or means may be implemented by hardware, software, or hardware executing corresponding software. The hardware or the software includes one or more modules or units configured to perform functions in the foregoing methods.

It may be understood that when the communication apparatus according to any one of the fourth aspect to the eleventh aspect is a chip, the foregoing sending action/function may be understood as output, and the foregoing receiving action/function may be understood as input.

According to a twelfth aspect, a computer-readable storage medium is provided. The computer-readable storage medium stores a computer program or instructions. When the computer program or the instructions are run on a communication apparatus, the communication apparatus is enabled to perform the method according to any one of the foregoing aspects.

According to a thirteenth aspect, a computer program product including instructions is provided. When the computer program product runs on a communication apparatus, the communication apparatus is enabled to perform the method according to any one of the foregoing aspects.

For technical effects brought by any design of the seventh aspect to the thirteenth aspect, refer to the technical effects brought by different designs of the first aspect, the second aspect, or the third aspect. Details are not described herein again.

According to a fourteenth aspect, a communication system is provided. The communication system includes the first LAF network element according to the first aspect and the second LAF network element according to the second aspect.

According to a fifteenth aspect, a communication system is provided. The communication system includes the N LAF network elements according to the third aspect.

### BRIEF DESCRIPTION OF DRAWINGS

FIG. 1 is a structural diagram of a hierarchical blockchain management architecture based on vertical network division according to an embodiment of this application;
FIG. 2 is a structural diagram of a multi-LAF network element blockchain management architecture according to an embodiment of this application;
FIG. 3(a) and FIG. 3(b) are a structural diagram of a hierarchical blockchain management architecture based on horizontal network division according to an embodiment of this application;
FIG. 4 is a structural diagram of another multi-LAF network element blockchain management architecture according to an embodiment of this application;
FIG. 5 is a diagram of an architecture of a communication system according to an embodiment of this application;
FIG. 6 is a diagram of an architecture of another communication system according to an embodiment of this application;
FIG. 7 is a schematic flowchart of a blockchain establishment method according to an embodiment of this application;
FIG. 8 is a schematic flowchart of a blockchain establishment method according to an embodiment of this application;
FIG. 9 is a schematic flowchart of another blockchain establishment method according to an embodiment of this application;
FIG. 10 is a diagram of a structure of a communication apparatus according to an embodiment of this application; and
FIG. 11 is a diagram of a structure of another communication apparatus according to an embodiment of this application.

### DESCRIPTION OF EMBODIMENTS

To better understand embodiments of this application, the following descriptions are provided before embodiments of this application are described.

First, in this application, "indicate" may include "directly indicate" and "indirectly indicate". When a piece of "indication information" is described as indicating A, the indication information may directly indicate A or indirectly indicate A, but it does not indicate that the indication information definitely carries A.

Information indicated by indication information is referred to as to-be-indicated information. In a specific implementation process, the to-be-indicated information may be indicated in a plurality of manners, for example, but not limited to, the following manners: The to-be-indicated information may be directly indicated. For example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of all pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information.

In addition, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device. The configuration information may include, for example, but not limited to one or a combination of at least two of radio resource control (radio resource control, RRC) signaling, medium access control (medium access control, MAC) layer signaling, and physical layer signaling. The MAC layer signaling includes, for example, a MAC control element (control element, CE), and the physical (physical, PHY) layer signaling includes, for example, downlink control information (downlink control information, DCI).

Second, the terms "first", "second", and various numeric numbers in the following embodiments are merely used for distinguishing for ease of description, and are not intended to limit the scope of embodiments of this application. For example, the terms are used to distinguish between different indication information. For another example, a first network area and a second network area are merely used to distinguish between different areas, and a sequence of the first network area and the second network area is not limited. A person skilled in the art may understand that the terms such as "first" and "second" do not limit a quantity or an execution sequence, and the terms such as "first" and "second" do not indicate a definite difference.

Third, "predefinition" or "preconfiguration" may be implemented by pre-storing corresponding code or a corresponding table in a device (for example, including a terminal device or a network device) or in another manner that can indicate related information. A specific implementation of "predefinition" or "preconfiguration" is not limited in this application. "Stored" may be "stored in one or more memories". The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in this application.

Fourth, a "protocol" in embodiments of this application may be a standard protocol in the communication field, for example, may include an LTE protocol, an NR protocol, and a related protocol applied to a future communication system. This is not limited in this application.

Fifth, in embodiments of this application, terms "information (information)", "signal (signal)", "message (message)", "channel (channel)", and "signaling (signaling)" may be interchangeably used sometimes. It should be noted that meanings expressed by the terms are consistent when differences of the terms are not emphasized. Terms "of (of)", "corresponding (corresponding, related)", and "corresponding (corresponding)" may be interchangeably used sometimes. It should be noted that meanings expressed by the terms are consistent when differences of the terms are not emphasized.

Sixth, the technical solutions in embodiments of this application may be applied to various communication systems, for example, a wireless fidelity (wireless fidelity, Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system such as a long term evolution (long term evolution, LTE) system, a worldwide interoperability for microwave access (worldwide interoperability for microwave access, WiMAX) communication system, a 5th generation (5th generation, 5G) mobile communication system such as a new radio (new radio, NR) system, and a future communication system such as a 6G mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

Finally, a network architecture and a service scenario described in embodiments of this application are intended to describe the technical solutions in embodiments of this application more clearly, and do not constitute a limitation on the technical solutions provided in embodiments of this application. A person of ordinary skill in the art may learn that, with evolution of the network architecture and emergence of a new service scenario, the technical solutions provided in embodiments of this application are also applicable to a similar technical problem.

The following describes technical solutions of this application with reference to accompanying drawings.

As described in the background, a blockchain is a distributed ledger that integrates a plurality of technologies such as a cryptography technology, a P2P network, and a distributed database. Based on a feature of a blockchain, in the 6G era, more services need to deploy a ledger function on a network node. For example, a terminal device reports environment awareness information in real time, or a base station reports key performance indicator (key performance indicator, KPI) information in real time. In addition, identity and trust issues are the earliest, most intuitive, and effective blockchain applications. Therefore, 6G communication network entities are bound to participate in data reporting, query, consensus, or operation and maintenance of ledgers to different degrees. However, a communication network needs to have a complete set of management architectures and methods for blockchain capabilities, blockchain construction, and blockchain deployment of various communication network entities (such as a terminal device, an radio access network (radio access network, RAN) device, a core network (core network, CN) device, and a third-party application), to implement the foregoing scenario.

However, in the research of a 6G BAAS, how to use an LAF to create a blockchain based on a large-scale underlying node in a 6G network is still an urgent problem to be resolved currently.

Therefore, an embodiment of this application provides a blockchain establishment method, to implement blockchain deployment based on a large-scale underlying node in a 6G network.

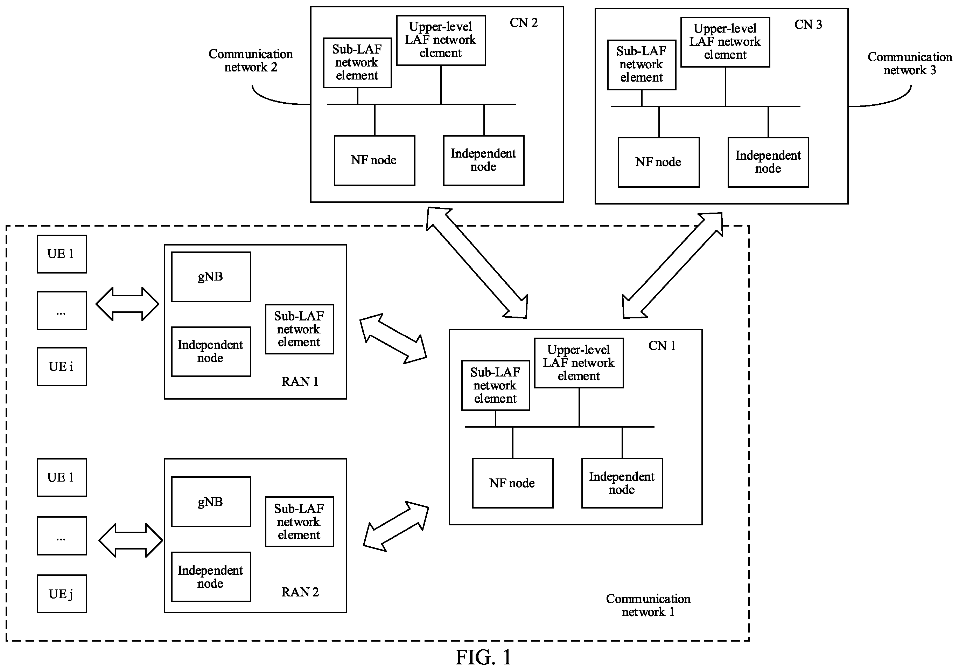

For example, FIG. 1 is a structural diagram of a hierarchical blockchain management architecture based on vertical network division according to an embodiment of this application. As shown in FIG. 1, the hierarchical blockchain management architecture may be obtained through vertical division of an entire communication network. For example, one or more network areas are obtained by dividing the entire communication network based on a network RAN and/or a network CN, and one LAF network element and one or more nodes that can be configured to construct a blockchain are deployed in each network area.

As shown in FIG. 1, one sub-LAF network element is deployed in each RAN network (for example, a RAN 1 and a RAN 2), one sub-LAF network element is also deployed in a network CN 1 connected to the networks RAN 1 and RAN 2, and an upper-level LAF network element configured to manage and schedule each sub-LAF network element is also located in the network CN 1. The sub-LAF network element deployed in the RAN network is responsible for configuring, activating, managing, and the like a blockchain capability of a node in a RAN network area in which the sub-LAF network element is located. The sub-LAF network element deployed in the network CN 1 is responsible for configuring, activating, managing, and the like a blockchain capability of a node in a CN network area in which the sub-LAF network element is located. In other words, the sub-LAF network element in FIG. 1 is configured to manage a blockchain deployed in a network area in which the sub-LAF network element is located.

In addition, in the network architecture shown in FIG. 1, for example, in a scenario in which a blockchain is established in a plurality of operator networks (that is, across operator networks), an upper-level LAF network element located in a CN 1 may further communicate with an upper-level LAF network element located in another operator network (for example, a CN 2 and a CN 3), and the upper-level LAF network element in each network CN may determine, in a distributed negotiation manner, a blockchain establishment requirement in a corresponding managed network range, to indicate, based on the blockchain establishment requirement obtained through negotiation and in the network range managed by the upper-level LAF network element, a lower-level LAF network element to create a blockchain in a network area in which the lower-level LAF network element is located. A specific implementation of the solution is described in the following method embodiment. Details are not described herein. It may be understood that the networks CN 2 and CN 3 shown in FIG. 1 may be separately connected to one or more networks RANs, and a sub-LAF network element is also deployed in each network RAN. For a specific structure, refer to a connection structure of the network CN 1. Details are not described herein again.

It may be understood that, in the network architecture shown in FIG. 1, in a scenario in which a blockchain is established across operator networks, only one upper-level LAF network element may be deployed in each of a plurality of networks CNs, and no other sub-LAF network element is deployed. The upper-level LAF network element is configured to perform blockchain management on the network CN and the network RAN connected to the network CN. This is not specifically limited in this embodiment of this application.

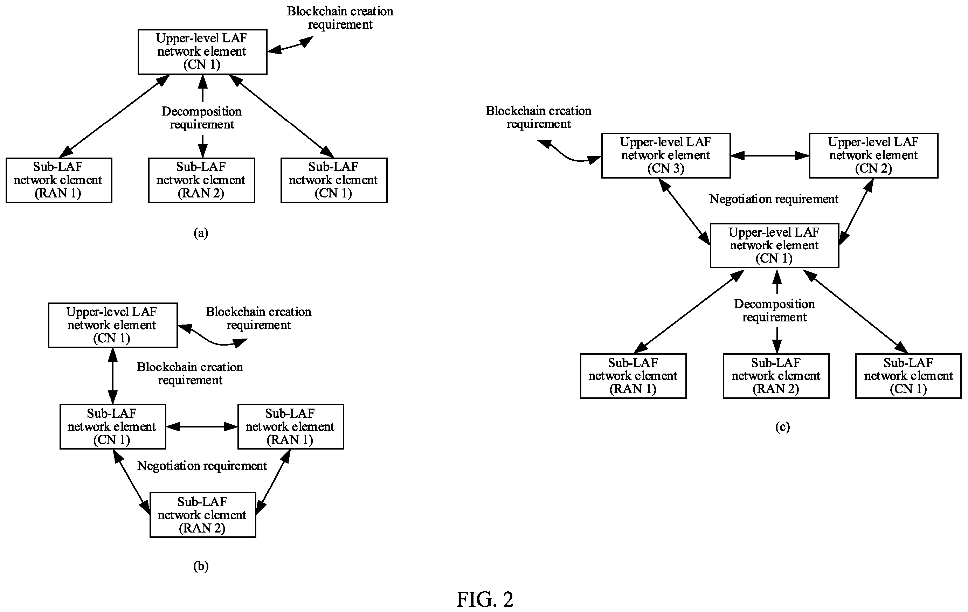

The following uses the hierarchical blockchain management architecture shown in FIG. 1 as an example to describe, with reference to FIG. 2, a multi-LAF network element blockchain management architecture applicable to the blockchain establishment method provided in embodiments of this application.

(a) in FIG. 2 shows a hierarchically deployed LAF network element management architecture in a single operator network. After receiving a blockchain creation requirement from a management plane or a service plane, an upper-level LAF network element in a communication network performs requirement decomposition on the blockchain creation requirement, and then delivers a decomposed requirement to one or more sub-LAF network elements. In other words, the upper-level LAF network element may select to create a blockchain in a single network area (for example, a RAN 1, a RAN 2, or a CN 1), or may select to create a blockchain in a plurality of network areas (for example, a RAN 1, a RAN 2, and a CN 1), and then each sub-LAF network element delivers, based on a received decomposed blockchain creation requirement, a blockchain instruction to a node in a network area managed by the sub-LAF network element, to create a blockchain.

(b) in FIG. 2 shows another hierarchically deployed LAF network element management architecture in a single operator network. Different from (a) in FIG. 2, in (b) in FIG. 2, each sub-LAF network element does not receive a decomposed blockchain creation requirement from an upper-level LAF network element, but determines a blockchain creation requirement of the sub-LAF network element through negotiation between sub-LAF network elements. For example, after an upper-level LAF network element in a communication network receives a blockchain creation requirement from a management plane or a service plane, and determines that blockchain creation needs to be performed in several network areas (for example, a RAN 1, a RAN 2, and a CN 1), the upper-level LAF network element may send the blockchain creation requirement from the management plane or the service plane to any sub-LAF network element (for example, a sub-LAF network element corresponding to the CN 1) corresponding to a network area in which blockchain creation needs to be performed. In this way, the sub-LAF network element (the sub-LAF network element corresponding to the CN 1) communicates with another sub-LAF network element (for example, a sub-LAF network element corresponding to the RAN 1 and a sub-LAF network element corresponding to the RAN 2), and obtains a corresponding blockchain creation requirement through negotiation, so that the sub-LAF network element can deliver, based on the blockchain creation requirement obtained through negotiation, a blockchain instruction to a node in a network area managed by the sub-LAF network element, to create a blockchain.

(c) in FIG. 2 shows another distributedly deployed LAF network element management architecture in a plurality of operator networks. When a blockchain is established in a plurality of operator networks (for example, a CN 1 to a CN 3) (that is, a blockchain is established across operators), one upper-level LAF network element is deployed in each operator communication network. After receiving a blockchain creation requirement from a management plane or a service plane, an upper-level LAF network element in any operator communication network may communicate with an upper-level LAF network element in another operator communication network, obtain a corresponding blockchain creation requirement through negotiation, and then deliver, based on the blockchain creation requirement obtained through negotiation, a blockchain instruction to a node in a network area managed by the upper-level LAF network element, to create a blockchain. It may be understood that one or more sub-LAF network elements may be deployed in any operator communication network. For example, an upper-level LAF network element corresponding to a CN 1 corresponds to three sub-LAF network elements, which respectively correspond to three network areas: a RAN 1, a RAN 2, and a CN 1. After each upper-level LAF network element obtains a blockchain creation requirement obtained through negotiation, each sub-LAF network element may obtain a blockchain creation requirement in a corresponding network area in a manner in (a) or (b) in FIG. 2, so that the sub-LAF network element delivers a blockchain instruction to a node in a network area managed by the sub-LAF network element, to create a blockchain.

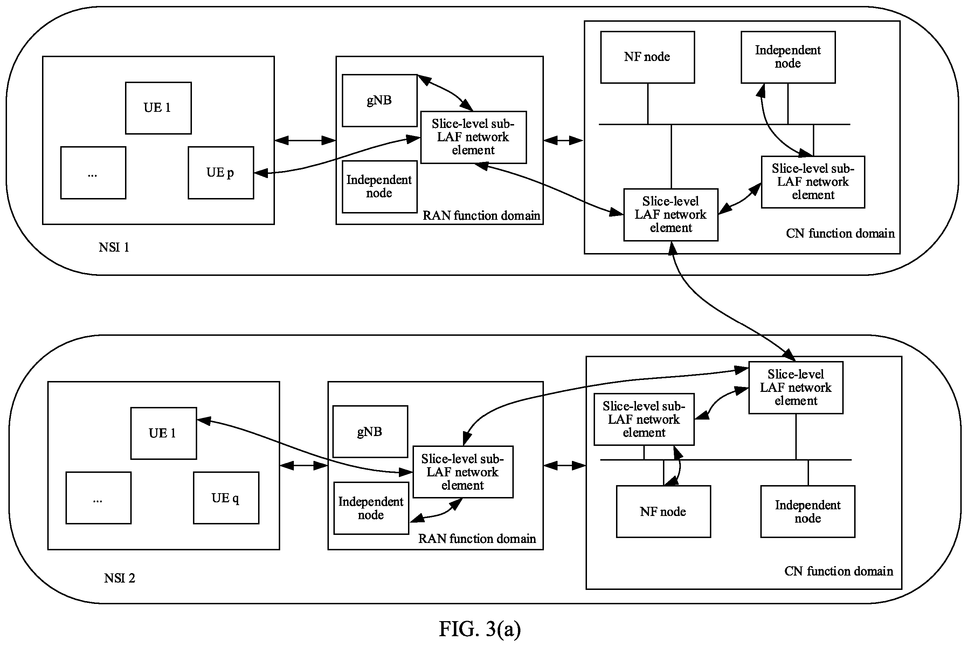

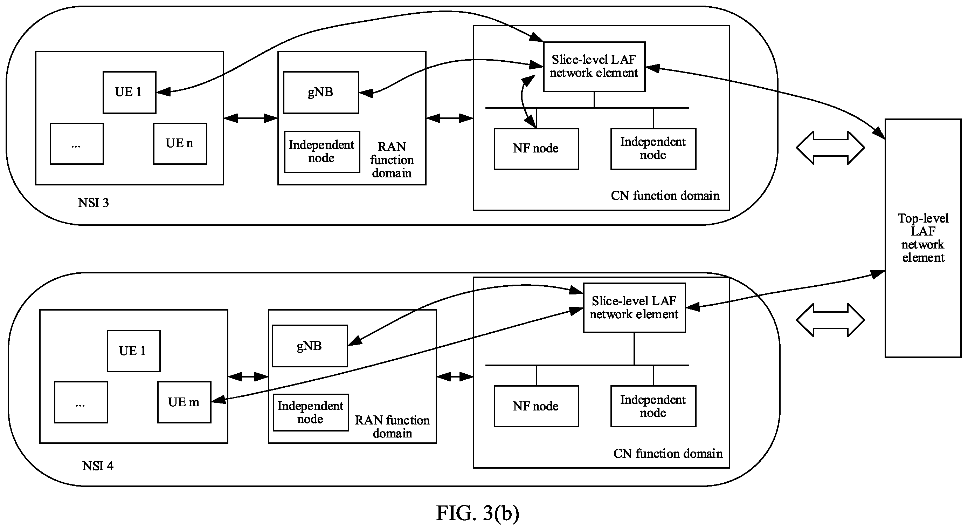

In this embodiment of this application, the hierarchical blockchain management architecture may alternatively be obtained based on horizontal division of the entire communication network. For example, the entire communication network is divided based on a network slice to obtain one or more network areas. For example, FIG. 3(a) and FIG. 3(b) are a structural diagram of a hierarchical blockchain management architecture based on horizontal network division according to an embodiment of this application. The architecture is applicable to a scenario in which network slices are provided for different industries or users for use, but information exchange and transaction exist across industries.

As shown in FIG. 3(a), one slice-level LAF network element and one or more slice-level sub-LAF network elements are deployed in one network slice instance (network slice instance, NSI). The slice-level LAF network element is configured to manage all slice-level sub-LAF network elements in an NSI in which the slice-level LAF network element is located. The slice-level sub-LAF network element is deployed in each function domain in one NSI, and is configured to perform blockchain management on a node in the function domain in which the slice-level sub-LAF network element is located. Division of the function domain in the NSI has a similar structure as the division shown in FIG. 1. For example, one slice-level sub-LAF network element is deployed in each of a CN function domain and a RAN function domain in each of an NSI 1 and an NSI 2, and a slice-level LAF network element that manages the slice-level sub-LAF network element is also located in the CN function domain, but a slice-level LAF network element located in the CN function domain has a higher level than a slice-level sub-LAF network element located in the CN function domain.

It may be understood that, in a scenario of hierarchical blockchain management of a single network slice, the slice-level LAF network element is an upper-level LAF network element of the slice-level sub-LAF network element, and the slice-level sub-LAF network element is a sub-LAF network element of the slice-level LAF network element. In addition, the slice-level LAF network element may directly perform blockchain management on a node in the NSI, or may schedule a slice-level sub-LAF network element to perform blockchain management on a node in the NSI.

It should be noted that, in a scenario in which a blockchain is established in a plurality of network slices, as shown in FIG. 3(a), slice-level LAF network elements in different NSIs can communicate with each other to implement negotiation on a blockchain establishment requirement, for example, negotiation between a slice-level LAF network element in an NSI 1 and a slice-level LAF network element in an NSI 2. Each slice-level LAF network element may send, based on a negotiation result, a blockchain chain establishment requirement to a slice-level sub-LAF network element in an NSI in which the slice-level LAF network element is located, to construct and manage a blockchain in the NSI. The slice-level LAF network element in the NSI 1 and the slice-level LAF network element in the NSI 2 are LAF network elements at a same level, and a slice-level sub-LAF network element in a CN function domain and a slice-level sub-LAF network element in a RAN function domain are LAF network elements at a same level.

In addition, as shown in FIG. 3(b), in a scenario in which a blockchain is established in a plurality of network slices, a slice-level LAF network element in each NSI may be managed by a top-level LAF network element. For example, a slice-level LAF network element in an NSI 3 and a slice-level LAF network element in an NSI 4 are managed by the top-level LAF network element. The top-level LAF network element may also be referred to as an upper-level LAF network element of the slice-level LAF network element. A slice-level LAF network element may receive a blockchain establishment requirement from the top-level LAF network element, and construct and manage a blockchain in an NSI in which the slice-level LAF network element is located, so that each slice-level LAF network element may decompose the blockchain chain establishment requirement to each slice-level sub-LAF network element for blockchain construction and management. A slice-level LAF network element in an NSI 1 and a slice-level LAF network element in an NSI 2 separately receive a blockchain establishment requirement from a top-level LAF network element, to construct and manage a blockchain in a corresponding network slice. In this scenario, the top-level LAF network element is an upper-level LAF network element of the slice-level LAF network element, and the slice-level LAF network element is a sub-LAF network element of the top-level LAF network element.

It may be understood that, in the hierarchical management architecture shown in FIG. 3(b), one or more slice-level sub-LAF network elements may also be deployed in the NSI 3 and the NSI 4 similar to the NSI 1 and the NSI 2. In this scenario, LAF network elements are sequentially from top to bottom in terms of levels as follows: a top-level LAF network element -> a slice-level LAF network element in the NSI 3/a slice-level LAF network element in the NSI 4 -> a slice-level sub-LAF network element.

It may be understood that in the network architecture shown in FIG. 3(a) and FIG. 3(b), if only one slice-level LAF network element is deployed in one NSI, one NSI may represent one network area. If one slice-level LAF network element is deployed in one NSI, and one or more slice-level sub-LAF network elements are further deployed hierarchically, one slice-level sub-LAF network element corresponds to one network area. It may also be understood that one NSI network area is further divided into a plurality of network areas.

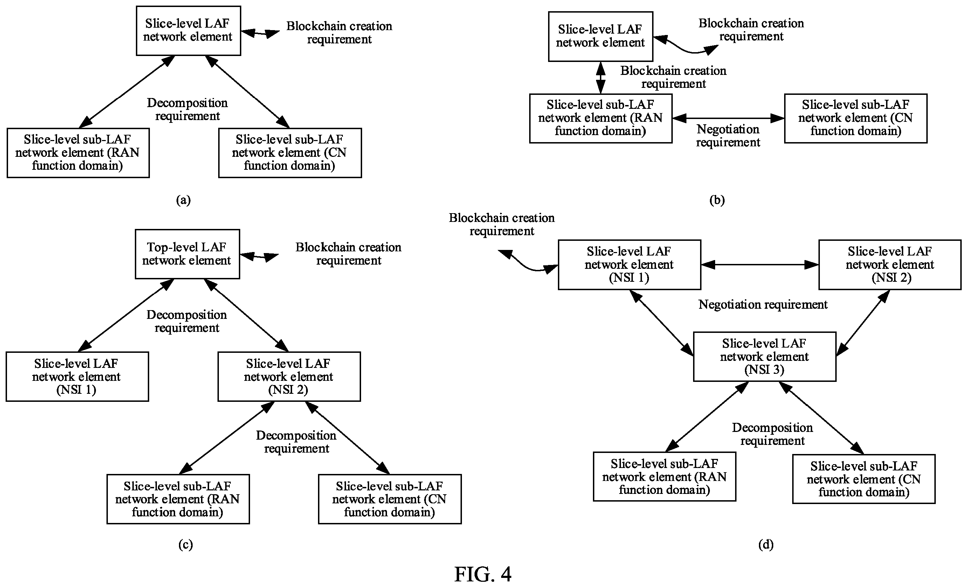

The following uses the hierarchical blockchain management architecture shown in FIG. 3(a) and FIG. 3(b) as an example to describe, with reference to FIG. 4, a multi-LAF network element blockchain management architecture applicable to the blockchain establishment method provided in embodiments of this application.

(a) in FIG. 4 shows a hierarchically deployed LAF network element management architecture in a single network slice. One slice-level LAF network element and one or more slice-level sub-LAF network elements are deployed in one NSI. When a blockchain is created in a single network slice, the slice-level LAF network element may directly or indirectly receive a blockchain creation requirement from a management plane or a service plane. Similar to the architecture in (a) in FIG. 2, in the architecture in (a) in FIG. 4, the slice-level LAF network element performs requirement decomposition on the blockchain creation requirement, and then delivers a decomposed requirement to one or more slice-level sub-LAF network elements. In other words, the slice-level LAF network element may select to create a blockchain in a single network area (for example, a RAN function domain or a CN function domain), or may select to create a blockchain in a plurality of network areas (for example, a RAN function domain and a CN function domain), and then each slice-level sub-LAF network element delivers, based on a received decomposed blockchain creation requirement, a blockchain instruction to a node in a network area managed by the slice-level sub-LAF network element, to create a blockchain.

(b) in FIG. 4 shows a distributedly deployed LAF network element management architecture in a single network slice. Similar to (b) in FIG. 2, in (b) in FIG. 4, after receiving a blockchain creation requirement, a slice-level LAF network element delivers the blockchain creation requirement to any slice-level sub-LAF network element that corresponds to a function domain and that is configured to establish a blockchain, and slice-level sub-LAF network elements that correspond to function domains and that configured to establish a blockchain determine respective blockchain creation requirements through negotiation.

(c) in FIG. 4 shows a distributedly deployed LAF network element management architecture in a plurality of network slices. When a blockchain is established in a plurality of network slices (that is, a blockchain is established across network slices), one slice-level LAF network element is deployed in each NSI, and slice-level LAF network elements in all NSIs are centrally managed by one top-level LAF network element. After receiving a blockchain creation requirement from a management plane or a service plane, the top-level LAF network element may decompose the blockchain creation requirement, and then deliver a decomposed blockchain creation requirement to a slice-level LAF network element in one or more NSIs, so that each slice-level LAF network element delivers, based on the received decomposed blockchain creation requirement, a blockchain instruction to a node in a network area managed by the slice-level LAF network element, to create a blockchain. Similarly, one or more slice-level sub-LAF network elements may be deployed in any NSI. After obtaining a decomposed blockchain creation requirement delivered by a top-level LAF, each slice-level LAF network element may further decompose the decomposed blockchain creation requirement and deliver a decomposed blockchain creation requirement to each slice-level sub-LAF network element, or slice-level sub-LAF network elements obtain a corresponding blockchain creation requirement by negotiating the decomposed blockchain creation requirement, so that the slice-level sub-LAF network element delivers a blockchain instruction to a node in a network area managed by the slice-level sub-LAF network element, to create a blockchain.

(d) in FIG. 4 shows a distributedly deployed LAF network element management architecture in a plurality of network slices. Slice-level LAF network elements in a plurality of NSIs may also obtain a corresponding blockchain creation requirement through negotiation. For related descriptions of the architecture, refer to specific content in (c) in FIG. 2. Details are not described herein again.

It may be understood that, in a scenario in which a blockchain is deployed in a single NSI, the slice-level LAF network element may also be referred to as an upper-level LAF network element, and the slice-level sub-LAF network element may also be referred to as a sub-LAF network element.

In this embodiment of this application, a node in each network area is a communication entity having a blockchain function (BC-enabler). For example, a node in a RAN network area or a RAN function domain may include a terminal device, an access network device, and an independent node (independent node, IN), and a node in a CN network area or a CN function domain may include a network function (network function, NF) network element, an application function (application function, AF) network element, and an independent node.

The access network device is a device that is located on a network side of the foregoing communication system and that has a wireless transceiver function, or a chip or a chip system that may be disposed in the device, and is configured to communicate with the terminal device. The access network device is also referred to as an access node. The access network device in embodiments of this application includes but is not limited to a base station (base station, BS), an evolved NodeB (evolved NodeB, eNodeB), a transmission reception point (transmission reception point, TRP), a next generation NodeB (next generation NodeB, gNB) in a 5G mobile communication system, a next generation base station in a 6th generation (6th generation, 6G) mobile communication system, an access network device in an open access network (open RAN, ORAN) system or a module in the access network device, a base station in a future mobile communication system, an access point (access point, AP) in a Wi-Fi system, and the like. Alternatively, the access network device may be a module or a unit that can implement some functions of the base station. For example, the access network device may be a central unit (central unit, CU), a distributed unit (distributed unit, DU), a CU-control plane (control plane, CP), a CU-user plane (user plane, UP), a radio unit (radio unit, RU), or the like described below. In the ORAN system, the CU may also be referred to as an O-CU, the DU may also be referred to as an open (open, O)-DU, the CU-CP may also be referred to as an O-CU-CP, the CU-UP may also be referred to as an O-CUP-UP, and the RU may also be referred to as an O-RU. The access network device may be a macro base station, a micro base station or an indoor base station, a relay node or a donor node, or a radio controller in a cloud radio access network (cloud radio access network, CRAN) scenario. Optionally, the access network device may alternatively be a server, a wearable device, a vehicle-mounted device, or the like. For example, an access network device in a V2X technology may be a road side unit (road side unit, RSU). A plurality of access network devices in the communication system may be base stations of a same type, or may be base stations of different types. The base station may communicate with the terminal device, or may communicate with the terminal device via a relay station. The terminal device may communicate with the plurality of base stations in different access technologies.

The terminal device is a terminal that accesses the communication system and that has a wireless transceiver function, or a chip or a chip system that may be disposed in the terminal. The terminal device may also be referred to as user equipment (user equipment, UE), a user apparatus, an access terminal, a subscriber unit, a subscriber station, a mobile station, a remote station, a remote terminal, a mobile device, a user terminal, a terminal, a wireless communication device, a user agent, a user apparatus, or the like. The terminal device in embodiments of this application may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU with a terminal function, or the like. The terminal device in this application may alternatively be a vehicle-mounted module, a vehicle-mounted module assembly, a vehicle-mounted component, a vehicle-mounted chip, or a vehicle-mounted unit that is built in a vehicle as one or more components or units. The vehicle may use the vehicle-mounted module, the vehicle-mounted module assembly, the vehicle-mounted component, the vehicle-mounted chip, or the vehicle-mounted unit that is built in the vehicle, to implement the method provided in this application.

The independent node is an independent resource that can be centrally scheduled in a communication network. For example, the independent node may be a server, a personal computer (personal computer, PC), a virtual machine (virtual machine, VM), an application container engine (docker), or a blockchain appliance, and may be integrated into hardware or software such as a security card, a security chip, a subscriber identity module (subscriber identity module, SIM), or a software module. The NF network element may be a user plane function (user plane function, UPF) network element, an authentication server function (authentication server function, AUSF) network element, an access and mobility management function (access and mobility management function, AMF) network element, a session management function (session management function, SMF) network element, a network slice selection function (network slice selection function, NSSF) network element, a network exposure function (network exposure function, NEF) network element, a network function repository function (NF repository function, NRF) network element, a policy control function (policy control function, PCF) network element, a unified data management (unified data management, UDM) network element, a unified data repository (unified data repository, UDR) network element, or the like in a CN.

It should be noted that an LAF network element in embodiments of this application may be responsible for life cycle management of a ledger, for example, ledger deployment and access control. The LAF network element may be an independent NF network element or hardware device, or may be deployed on an existing NF network element in a superimposed manner. It should be understood that a name of the LAF network element in embodiments of this application is merely an example, and may also be another name. This is not limited in embodiments of this application.

It may be understood that, in embodiments of this application, deploying a sub-LAF network element in a communication network can implement regional blockchain management in the communication network, to reduce load of a single LAF network element.

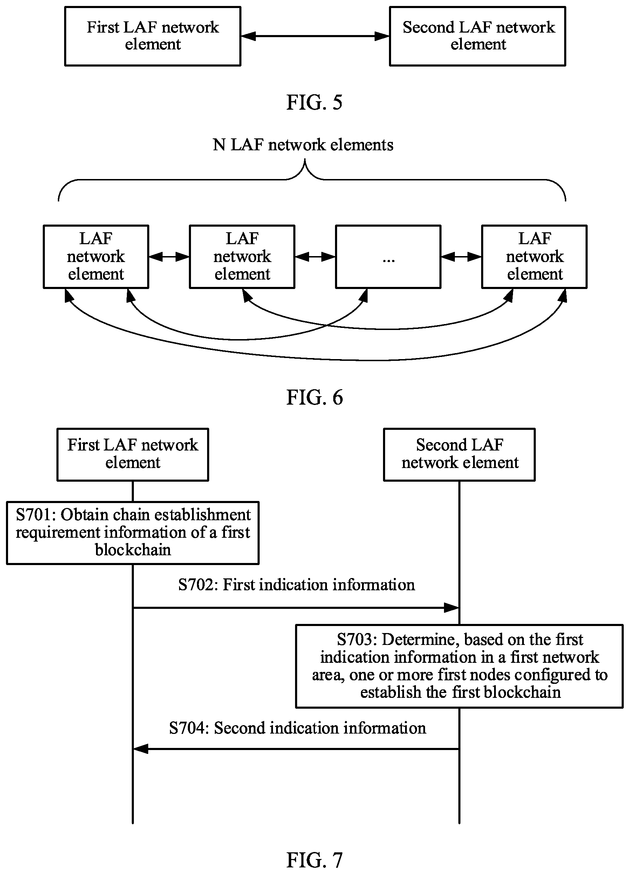

For example, FIG. 5 is a diagram of an architecture of a communication system to which a blockchain establishment method is applicable according to an embodiment of this application. The communication system is applicable to (a) in FIG. 2, and is also applicable to (a) or (c) in FIG. 4.

As shown in FIG. 5, the communication system includes a first LAF network element and a second LAF network element. The first LAF network element is an upper-level LAF network element of the second LAF network element, and the second LAF network element is located in a first network area in a communication network. The first LAF network element is configured to: invoke and manage the second LAF network element, to trigger the second LAF network element to configure, activate, manage, and the like a blockchain capability in the first network area in which the second LAF network element is located, so that a blockchain can be created and managed in the first network area.

For example, the first LAF network element may be the upper-level LAF network element in FIG. 1, and the second LAF network element is a corresponding sub-LAF network element. For another example, the first LAF network element may be the slice-level LAF network element in FIG. 3(a) and FIG. 3(b), and the second LAF network element is a corresponding slice-level sub-LAF network element. For still another example, the first LAF network element is the top-level LAF network element in FIG. 3(a) and FIG. 3(b), and the second LAF network element is a slice-level LAF network element.

For example, the first LAF network element obtains chain establishment requirement information of a first blockchain, where the chain establishment requirement information is used to determine a requirement of the first blockchain. The first LAF network element sends first indication information to the second LAF network element corresponding to the first network area. Correspondingly, the second LAF network element corresponding to the first network area receives the first indication information from the first LAF network element. The first indication information is determined based on the chain establishment requirement information, and the first indication information indicates a requirement of the first blockchain in the first network area. The second LAF network element determines, based on the first indication information in the first network area, one or more first nodes configured to establish the first blockchain. A specific implementation of the solution is described in the following method embodiment. Details are not described herein.

It should be noted that the first LAF network element in this embodiment of this application may also be referred to as an upper-level LAF network element, an upper-layer LAF network element, or the like, and an LAF network element (for example, the second LAF network element) deployed in each network area may also be referred to as a sub-LAF network element of the first LAF network element, a lower-level LAF network element, or the like. This is not specifically limited.

For another example, FIG. 6 is a diagram of an architecture of another communication system according to an embodiment of this application. The communication system is applicable to (b) or (c) in FIG. 2, and is also applicable to (b) or (d) in FIG. 4. As shown in FIG. 6, the communication system includes N LAF network elements, where N is a positive integer greater than 1, the N LAF network elements are LAF network elements at a same level, the N LAF network elements may communicate with each other, and the N LAF network elements are LAF network elements that jointly create a same blockchain. For example, the N LAF network elements may be N sub-LAF network elements in FIG. 1, may be N upper-level LAF network elements in FIG. 1, may be N slice-level LAF network elements in FIG. 3(a) and FIG. 3(b), or may be N slice-level sub-LAF network elements in FIG. 3(a) and FIG. 3(b).

For example, a third LAF network element obtains first chain establishment requirement information of a first blockchain, where the third LAF network element is one of N LAF network elements that jointly create the first blockchain, and N is a positive integer greater than 1. The third LAF network element sends, according to a blockchain creation policy, second chain establishment requirement information to at least one LAF network element other than the third LAF network element in the N LAF network elements. A specific implementation of the solution is described in the following method embodiment. Details are not described herein.

It should be noted that the blockchain establishment method provided in embodiments of this application is applicable to the first LAF network element and the second LAF network element shown in FIG. 5, or is applicable to the N LAF network elements shown in FIG. 6. For a specific implementation, refer to the following method embodiments. Details are not described herein again.

It should be noted that in embodiments of this application, cross-domain blockchain creation may be cross-slice blockchain establishment, cross-operator (which may also be referred to as cross-CN) blockchain establishment, cross-network area blockchain establishment, or the like. This is not specifically limited in embodiments of this application.

It should be understood that devices or function nodes included in the communication system shown in FIG. 5 or FIG. 6 are merely described as examples, and constitute no limitation on embodiments of this application. Actually, the communication system shown in FIG. 5 or FIG. 6 may further include another network element, device, or function node that has an interaction relationship with the device or function node shown in the figure. This is not specifically limited herein.

It should be noted that the solutions in embodiments of this application may also be applied to another communication system, and a corresponding name may also be replaced with a name of a corresponding function in the another communication system.

The following describes, in detail with reference to FIG. 7 to FIG. 9, a blockchain establishment method provided in embodiments of this application.

For example, FIG. 7 is a schematic flowchart of a blockchain establishment method according to an embodiment of this application. The blockchain establishment method is applicable to the communication system shown in FIG. 5.

As shown in FIG. 7, the blockchain establishment method includes the following steps.

S701: A first LAF network element obtains chain establishment requirement information of a first blockchain.

The chain establishment requirement information indicates a creation requirement of the first blockchain that needs to be established. In other words, the chain establishment requirement information is used to determine a requirement of the first blockchain.

In this embodiment of this application, the chain establishment requirement information may include one or more of a requirement on a ledger structure, a requirement on a quantity of nodes, a requirement on a node type, a requirement on a node location, or a requirement on a node capability of the first blockchain that needs to be established. It may be understood that the chain establishment requirement information may further include other related information that is not shown in this embodiment of this application and that is conducive to completing blockchain establishment, for example, whether the first blockchain needs to be created across domains, or indicating a quantity of network areas in which the first blockchain is created. This is not specifically limited in embodiments of this application.

In embodiments of this application, the ledger structure may be a single-chain structure, a parallel-chain structure, a slice structure, a directed acyclic graph (directed acyclic graph, DAG) structure, or the like. The requirement on the quantity of nodes may be a total quantity of nodes or a minimum quantity of nodes that establish the first blockchain. The node type may be an account book type, a communication network node type, an access control type, a configuration type, or the like. The requirement on the node location may include a location requirement on a terminal device, a location requirement on a base station, a requirement on a public land mobile network (public land mobile network, PLMN) or an NSI to which an NF belongs, a location requirement on an independent node, or the like. The node capability may include whether a node can be used as a client (that is, a client capability), whether a node can be used as a full node (that is, a full node capability), whether a node can be used as a micro node (that is, a micro node capability), whether a node has a consensus capability, whether a node has a consensus and storage capability, a supportable consensus mechanism, whether a node supports an editable function, whether a node has a smart contract capability, whether a node has a trusted execution environment, or the like. The consensus mechanism may be a proof of work (proof of work, POW) consensus mechanism, a proof of stake (proof of stake, POS) consensus mechanism, a reliable, replicated, redundant, and fault-tolerant (reliable, replicated, redundant, and fault-tolerant, RAFT) consensus mechanism, a practical Byzantine fault tolerance (practical Byzantine fault tolerance, PBFT) consensus mechanism, and the like.

In this embodiment of this application, the client capability indicates that a node can be used as a client (client) to query or report a related transaction. The full node capability indicates that a node can be used as a full node, can independently check all transactions on a blockchain and update data in real time, and is mainly responsible for broadcasting and verifying a transaction on the blockchain. The micro node capability indicates that a node can be used as a micro node or a light node, can receive a transaction from a client, and generate a micro block through packaging. The consensus capability indicates that a node can perform consensus verification, generate a completed block, and synchronize the completed block to another node, but does not store a complete ledger. The consensus and storage capability indicates that a node performs consensus verification, generates a completed block, synchronizes the completed block to another node, and stores a complete ledger.

In a scenario in which the first blockchain is deployed hierarchically in a single operator network or a single network slice, for example, in the communication network 1 shown in FIG. 1 or the NSI 3 or the NSI 4 shown in FIG. 3(a) and FIG. 3(b), the first LAF network element is configured to manage a blockchain capability in the entire operator network or the entire network slice. For example, the first LAF network element may be an upper-level LAF network element in the communication network 1 shown in FIG. 1, or a slice-level LAF network element in the NSI 3 or the NSI 4 in FIG. 3(a) and FIG. 3(b). The first LAF network element may receive chain establishment requirement information of the first blockchain from a management plane or a service plane, and deploy the first blockchain in a single operator network or a single slice based on the chain establishment requirement information.

In a scenario in which the first blockchain is deployed in a plurality of network slices, as shown in FIG. 3(b), the first LAF network element may be configured to manage a top-level LAF network element of a slice-level LAF network element in the plurality of network slices. The first LAF network element may also receive chain establishment requirement information of the first blockchain from a management plane or a service plane, and deploy the first blockchain in a plurality of slices based on the chain establishment requirement information.

S702: The first LAF network element sends first indication information to a second LAF network element corresponding to a first network area. Correspondingly, the second LAF network element corresponding to the first network area receives the first indication information from the first LAF network element.

The first indication information is determined based on the chain establishment requirement information, and the first indication information indicates a requirement of the first blockchain in the first network area. The first indication information may include one or more of a quantity of nodes needed by the first blockchain in the first network area, a node type needed by the first blockchain in the first network area, or a node capability needed by the first blockchain in the first network area.

In a possible design solution, the chain establishment requirement information may directly indicate one or more nodes configured to establish the first blockchain. For example, the establishment requirement information includes an identifier of a node configured to establish the first blockchain. In this scenario, the first LAF network element may determine, based on an identifier of a node configured to establish the first blockchain, one or more network areas in which the node is located, and correspondingly send indication information to a sub-LAF network element in the network area, to indicate the sub-LAF network element to determine a node in the network area in which the sub-LAF network element is located, to establish the first blockchain.

In a possible design solution, when the chain establishment requirement information does not indicate, in a determined manner, one or more network areas in which the first blockchain is established, for example, the chain establishment requirement information includes a quantity of nodes, a node type, and a node capability that are needed for establishing the first blockchain in a communication network managed by the first LAF network element. After receiving the chain establishment requirement information, the first LAF network element may parse the chain establishment requirement information based on a blockchain capability in each network area in a communication network managed by the first LAF network element (that is, a blockchain capability in a network area corresponding to each sub-LAF network element), and determine one or more network areas that meet the chain establishment requirement information and a chain establishment requirement of the first blockchain in the corresponding one or more network areas. For example, the first LAF network element determines that the first blockchain needs to be created only in one network area (that is, the first network area). In this case, the first LAF network element sends first indication information to a sub-LAF network element (namely, the second LAF network element) in the first network area. The first indication information indicates a requirement of the second LAF for creating the first blockchain in the first network area in which the second LAF is located. The first indication information may include a quantity of nodes, a node type, a node capability, or the like that is needed by the first blockchain in the first network area.

For example, in the communication network 1 shown in FIG. 1, that is, in a scenario in which a first blockchain is established in a single operator network, the communication network 1 includes three network areas (that is, a network area RAN 1, a network area RAN 2, and a network area CN 1), and the first LAF network element is an upper-level LAF network element in the CN 1. Chain establishment requirement information received by the first LAF network element includes that a quantity of nodes needed for creating the first blockchain is 10, five full nodes, three micro nodes, and two client nodes are needed, each node supports an editable function, and a supported consensus mechanism is a POW consensus mechanism. After receiving the chain establishment requirement information, the first LAF network element may parse the chain establishment requirement information based on a blockchain capability in each network area in the communication network 1 managed by the first LAF network element, and determine that the first blockchain needs to be created only in one network area RAN 1 (that is, the first network area). In this case, the first LAF network element sends first indication information to a sub-LAF network element (that is, the second LAF network element) in the network area RAN 1. The first indication information indicates the sub-LAF network element in the network area RAN 1 to create the first blockchain in the network area RAN 1. For example, the first indication information includes that a quantity of nodes needed by the first blockchain in the network area RAN 1 is 10, five full nodes (one base station, three terminal devices, and one independent node), three micro nodes (two terminal devices and one independent node), and two client nodes (one terminal device and one independent node) are needed, each node supports an editable function, and a supported consensus mechanism is a POW consensus mechanism.

It may be understood that in the NSI 3 or the NSI 4 in FIG. 3(a) and FIG. 3(b), that is, in a scenario in which a first blockchain is established in a single network slice, the first LAF network element is a slice-level LAF network element. For a specific process in which the first LAF network element determines the second LAF network element and sends the first indication information to the second LAF network element, refer to the related descriptions in the communication network 1. Details are not described herein again.

In another possible design solution, when the chain establishment requirement information indicates one or more network areas in which the first blockchain is established, for example, the chain establishment requirement information indicates a quantity of nodes, a node type, and a node capability that are needed for creating or establishing the first blockchain in the first network area. After receiving the chain establishment requirement information, the first LAF network element may determine, based on the chain establishment requirement information, a network area (that is, the first network area) used to establish the first blockchain, and the first LAF network element sends the first indication information to the second LAF network element corresponding to the first network area, to indicate a chain establishment requirement of the first blockchain in the first network area. In this case, it may be considered that the chain establishment requirement information is the same as the first indication information.

It should be noted that a blockchain capability in each network area managed by the first LAF network element may be reported by a corresponding sub-LAF network element in each network area to the first LAF network element before the first blockchain is established. For example, a blockchain capability in the first network area is reported. The second LAF network element sends third indication information to the first LAF network element. Correspondingly, the first LAF network element receives the third indication information from the first LAF network element. The third indication information indicates the blockchain capability in the first network area. It should be noted that a corresponding sub-LAF network element in each network area may periodically report a blockchain capability in each network area to the first LAF network element.

In this embodiment of this application, the blockchain capability in each network area may be a blockchain capability of a node that does not participate in blockchain creation in the network area, or may be a current blockchain capability of all nodes (including a node that has a blockchain capability and a node that does not have a blockchain capability, that is, not all nodes in each network area have a blockchain capability) in the network area. This is not limited in this embodiment of this application. The blockchain capability in each network area may include a quantity of nodes of various types (for example, a quantity of nodes of a full node type and a quantity of nodes of a client type), a quantity of nodes having a consensus mechanism, a quantity of nodes supporting an editable capability, a quantity of nodes having a smart contract capability, a quantity of nodes having a trusted execution environment, or the like. For example, in a blockchain capability reporting process, 1 may indicate that a node has a blockchain capability, and 0 may indicate that a node does not have a blockchain capability.

It should be noted that, a sub-LAF network element in each network area may deploy a blockchain capability for the node that does not have a blockchain capability. The first network area is used as an example. For a node on which a blockchain capability is not deployed (that is, that does not have a blockchain capability) in the first network area:

In a possible design solution, the first LAF network element may send fourth indication information to the second LAF network element. Correspondingly, the second LAF network element receives the fourth indication information from the first LAF network element. The fourth indication information indicates the second LAF network element to deploy a blockchain capability for one or more fifth nodes in the first network area, and the fifth node is a node that does not have a blockchain capability in the first network area. For example, the first LAF network element may determine, based on the blockchain capability that is of the first network area and that is reported by the second LAF network element, which nodes in the first network area do not have the blockchain capability, so that the first LAF network element can indicate, by using the fourth indication information, the second LAF network element to deploy the blockchain capability for the node that does not have the blockchain capability. The fourth indication information may indicate a requirement on the deployed blockchain capability, for example, a quantity of deployed nodes, a quantity of deployed micro nodes, or a consensus algorithm performed by a node.

Further, after receiving the fourth indication information, the second LAF network element may deploy, based on a network, computing, or storage capability or the like of the node, the blockchain capability for the node that does not have the blockchain capability. For example, the second LAF network element sends first information to a fifth node. Correspondingly, the fifth node receives the first information from the second LAF network element. The first information is used by the fifth node to deploy a blockchain capability. In this way, the second LAF network element triggers, by using the fourth indication information, blockchain deployment on the node that does not have the blockchain capability. In other words, that the second LAF network element sends the first information to the fifth node may be replaced with that the second LAF network element sends the first information to the fifth node based on the fourth indication information.

In the foregoing possible design solution, the sub-LAF network element in the network area triggers, through an upper-level LAF network element, deployment of the blockchain capability on the node that does not have the blockchain capability. In another possible design solution, a sub-LAF network element in a network area may actively trigger blockchain deployment on a node that does not have a blockchain capability, that is, the second LAF network element does not need to send the first information to the fifth node based on the fourth indication information. Similarly, the second LAF network element may deploy, based on a network, computing, or storage capability or the like of the node, a blockchain capability for the node that does not have the blockchain capability.

In still another possible design solution, a node that does not have a blockchain capability in each network area may also request a blockchain capability from a corresponding sub-LAF network element. For example, a fifth node sends a first request to the second LAF network element. Correspondingly, the second LAF network element receives the first request from the fifth node. The first request is used to request the second LAF network element to deploy a blockchain capability. Further, the second LAF network element may deploy, based on a network, computing, or storage capability or the like of the node, the blockchain capability for the node that does not have the blockchain capability. In other words, the second LAF network element sends the first information to the fifth node.

It should be understood that any one of the foregoing three possible blockchain capability deployment solutions is applicable to a scenario in which the entire network area does not have a blockchain capability, is applicable to a scenario in which a blockchain is established, or is applicable to a scenario before or after a blockchain is established. This is not specifically limited in this application.

It may be understood that in a scenario in which the first blockchain is established in a plurality of network areas, for example, the first blockchain is established in a network area RAN 1 and a network area RAN 2 in the communication network 1 shown in FIG. 1, the first blockchain is established in a RAN function domain and a CN function domain in the NSI 3 shown in FIG. 3(b), or the first blockchain is established in the NSI 1 and the NSI 2 shown in FIG. 3(a). The first LAF network element may decompose the chain establishment requirement information based on blockchain capabilities in the plurality of network areas, and separately send corresponding indication information to the plurality of determined network areas, to indicate a requirement of the first blockchain in each network area, so as to establish the first blockchain in the plurality of network areas. For a specific process, refer to the foregoing implementation process in the single network area. Details are not described herein again.

S703: The second LAF network element determines, based on the first indication information in the first network area, one or more first nodes configured to establish the first blockchain.

For example, after receiving the first indication information, the second LAF network element may determine, based on the first indication information and current information about each node in the first network area, one or more first nodes that meet a first blockchain creation requirement. The information about each node in the first network area may include location information of the node, blockchain capability information of the node, type information of the node, and the like.

For example, in the communication network 1 shown in FIG. 1, the first LAF network element is an upper-level LAF network element in the CN 1, the second LAF network element is a sub-LAF network element in the network area RAN 1, and the first indication information includes that a quantity of nodes needed by the first blockchain in the network area RAN 1 is 10, five full nodes, three micro nodes, and two client nodes are needed, each node supports an editable function, and a supported consensus mechanism is a POW consensus mechanism. Therefore, the sub-LAF network element in the network area RAN 1 may determine, based on a requirement of the first blockchain indicated by the first indication information, an appropriate node in the first network area to create the first blockchain. For example, the sub-LAF network element in the network area RAN 1 determines that a node that meets the requirement of the first blockchain includes one base station (for example, a gNB 1), three terminal devices (for example, UE 1 to UE 3), and one independent node (for example, an IN 1) that are used as full nodes and that support an editable function and a POW consensus mechanism, two terminal devices (for example, UE 5 and UE 6) that are used as micro nodes and that support an editable function and a POW consensus mechanism, and one terminal device (for example, UE 9) and one independent node (for example, an IN 2) that are used as client nodes and that support an editable function and a POW consensus mechanism, that is, a quantity of first nodes is 10, which are respectively the gNB 1, the UE 1 to the UE 3, the IN 1, the UE 5, the UE 6, the UE 9, and the IN 2.

Further, the second LAF network element may configure and activate a blockchain capability for one or more first nodes. For example, the second LAF network element sends a second configuration request to the first node. Correspondingly, the first node receives the second configuration request from the second LAF network element. The second configuration request is used to configure and activate a blockchain capability of the first node, so that the first node is used as a node on the first blockchain to implement a blockchain function.

Optionally, after completing configuration and activation of a blockchain, the first node may further feed back a configuration response to the second LAF network element. For example, the first node sends a second configuration response to the second LAF network element. Correspondingly, the second LAF network element receives the second configuration response from the first node. The second configuration response notifies a blockchain capability configuration result of the first node. For example, the second configuration response notifies that blockchain capability configuration of the first node succeeds or fails.

When the blockchain capability configuration of the first node succeeds, the second configuration response may carry one or more of an identifier of the first node, an internet protocol (internet protocol, IP) address (address) of the first node, public key information of the first node, certificate information of the first node, a type of the first node, or the like. The type of the first node may include a node type (for example, a full node) of the first node on the first blockchain and a node type (for example, a terminal device) of the first node in the communication network. In this way, the second LAF network element may collect statistics about information about the first node configured to establish the first blockchain in the first network area.

When the blockchain capability configuration of the first node fails, the second LAF network element may reselect, based on the first indication information, a node in the first network area to configure and activate a blockchain, so that a quantity of first nodes meets a requirement of the first blockchain.

According to the blockchain establishment method shown in FIG. 7, the first LAF network element may determine the requirement of the first blockchain in the first network area by decomposing the chain establishment requirement information, to send the first indication information to the second LAF network element in the lower-level LAF network elements managed by the first LAF network element, to establish the first blockchain in the first network area managed by the second LAF network element. Therefore, according to a hierarchical LAF network element management mechanism, the lower-level LAF network element is used as an end point for blockchain management, and a lower-level LAF network element can implement autonomy of a blockchain capability in a network area (for example, a slice or a network segment). The first LAF network element used as an upper-level LAF network element may not need to pay attention to a blockchain deployment process of the lower-level LAF network element in a network area corresponding to the lower-level LAF network element. In this way, blockchain creation and management based on a large-scale underlying node in a network can be implemented, and load of the LAF network element can also be reduced compared with a single LAF network element that implements blockchain establishment based on a large-scale communication network, thereby reducing possible single-point blocking caused by management performed by a single control node.

In a possible design solution, the blockchain establishment method provided in embodiments of this application may further include the following step:

S704: The second LAF network element sends second indication information to the first LAF network element. Correspondingly, the first LAF network element receives the second indication information from the second LAF network element.

The second indication information indicates the one or more first nodes configured to establish the first blockchain in the first network area. The second indication information may include one or more of a quantity of first nodes, a type of the first node, or node information of one or more third nodes, and the third node is a node that is in the one or more first nodes and that communicates with a node configured to establish the first blockchain in a network area other than the first network area.

In a scenario in which the first blockchain is established in the plurality of network areas, if a part of the one or more first nodes determined in the first network area needs to communicate with one or more nodes configured to establish the first blockchain in another network area, where the part of the first nodes (that is, one or more third nodes) may be referred to as an external node, the second LAF network element may report, to the first LAF network element, information about the part of the first nodes for external communication, that is, information about the third node, so that the first LAF network element configures communication between one or more nodes configured to establish the first blockchain in another network area and the third node.

Correspondingly, when one or more nodes configured to establish the first blockchain in another network area need to communicate with one or more first nodes in the first network area, the first LAF network element may send node configuration information for cross-domain communication to the second LAF network element based on information about an external node in indication information that is reported by a sub-LAF network element corresponding to the another network area and that indicates the one or more first nodes configured to establish the first blockchain, so that the second LAF network element can configure, based on the node configuration information for cross-domain communication, communication between a first node and a node in the another network area.

For example, the first LAF network element sends a first configuration request to the second LAF network element. Correspondingly, the second LAF network element receives the first configuration request from the first LAF network element. The first configuration request includes information about one or more second nodes, the second node is configured to communicate with the one or more first nodes configured to establish the first blockchain in the first network area, and the second node is a node in a network area other than the first network area, and is configured to establish the first blockchain. It should be understood that the information about the one or more second nodes is node configuration information for cross-domain communication, and is similar to the node information of the third node. For details, refer to the related descriptions of the node information of the third node. The details are not described herein again.

Optionally, the second LAF network element may further send a first configuration response to the first LAF network element. Correspondingly, the first LAF network element receives the first configuration response from the second LAF network element. The first configuration response notifies a cross-domain communication configuration result of the one or more first nodes. The cross-domain communication configuration result may be that cross-domain communication configuration succeeds, cross-domain communication configuration fails, or cross-domain communication configuration partially succeeds or partially fails. This is not specifically limited in embodiments of this application.

In this embodiment of this application, the node information of the third node may include one or more of an identifier of the third node on the first blockchain, an IP address of the third node, public key information of the third node, certificate information of the third node, or a type of the third node on the first blockchain. The identifier of the third node on the first blockchain and/or the IP address of the third node may be used by a node configured to establish the first blockchain in another network area to determine a location of the third node, to implement cross-network area communication. The public key information of the third node and/or the certificate information of the third node may be used to encrypt communication between a node configured to establish the first blockchain in another network area and the third node, to improve communication security.

It may be understood that, in a scenario in which the first blockchain is established only in a single network area, the second indication information may not carry node information of one or more third nodes. However, in this scenario, if first nodes that need to communicate with each other exist in the plurality of determined first nodes, the second LAF network element may send, to any one of the first nodes that need to communicate with each other, information about other one or more first nodes that need to communicate with each other, to configure communication between one first node and other one or more first nodes.

For example, the second LAF network element sends a third configuration request to a fourth node. Correspondingly, the fourth node receives the third configuration request from the second LAF network element. The third configuration request includes information about one or more first nodes other than the fourth node in the plurality of first nodes, the fourth node is any one of the plurality of first nodes, and the information about the one or more first nodes other than the fourth node in the plurality of first nodes is used by the fourth node to communicate with the one or more first nodes other than the fourth node in the plurality of first nodes. Specific content of the information about the one or more first nodes other than the fourth node in the plurality of first nodes is similar to the node information of the third node. For details, refer to the related descriptions of the node information of the third node. The details are not described herein again.

Optionally, the fourth node may send a third configuration response to the second LAF network element. Correspondingly, the second LAF network element receives the third configuration response from the fourth node. The third configuration response notifies an intra-domain communication configuration result of the fourth node. When the fourth node can communicate with the one or more first nodes other than the fourth node in the first network area, the third configuration response notifies that intra-domain communication configuration of the fourth node succeeds. When the fourth node cannot communicate with the one or more first nodes other than the fourth node in the first network area, the third configuration response notifies that intra-domain communication configuration of the fourth node fails.

In a possible design solution, after S701 to S704 are performed, the second LAF network element may also report, to the first LAF network element, a blockchain capability in the first network area after establishment of the first blockchain is completed, so that the first LAF network element updates the blockchain capability in the first network area.

FIG. 7 describes in detail a process of establishing the first blockchain in a single network area based on a hierarchical LAF network element architecture. The following describes, in detail with reference to a specific application scenario of the communication network 1 in FIG. 1, a process of establishing a first blockchain in a plurality of network areas. For example, a first blockchain is established in two network areas. The first LAF network element is an upper-level LAF network element in a CN 1. Three network areas in the communication network 1 are respectively a network area CN 1, a network area RAN 1, and a network area RAN 2. A sub-LAF network element in the network area CN 1 is a first sub-LAF network element, a sub-LAF network element in the network area RAN 1 is a second sub-LAF network element, a sub-LAF network element in the network area CN 1 is a third sub-LAF network element, and the first blockchain is established in the network area CN 1 and the network area RAN 1.

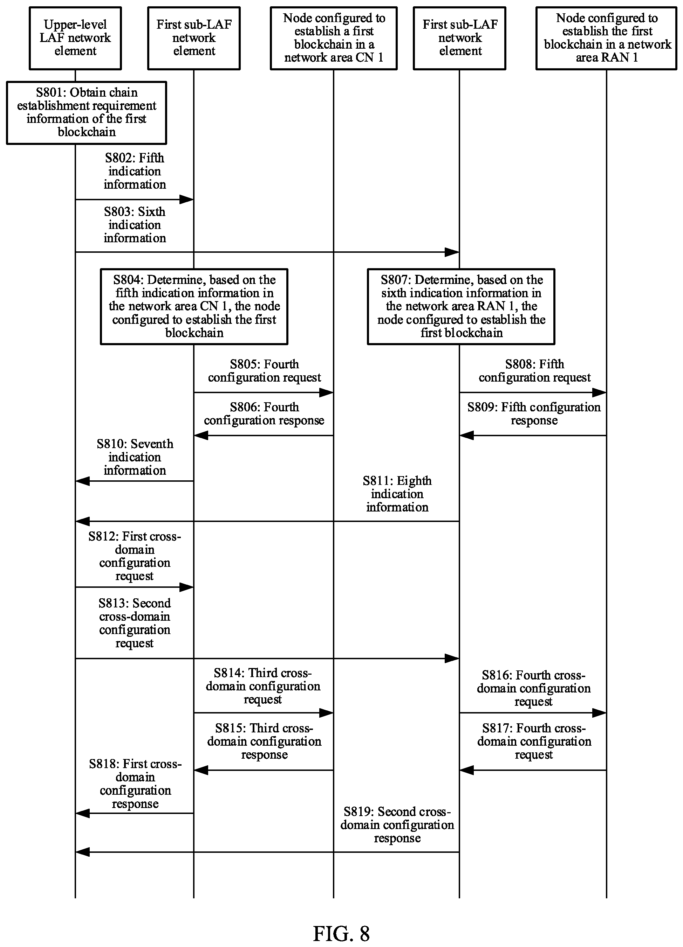

For example, FIG. 8 is a schematic flowchart of another blockchain establishment method according to an embodiment of this application. The blockchain establishment method includes the following steps.

S801: An upper-level LAF network element obtains chain establishment requirement information of a first blockchain.

For example, as shown in FIG. 1, three network areas (namely, a RAN 1, a RAN 2, and a CN 1) are deployed in a communication network 1. The upper-level LAF network element may receive the chain establishment requirement information of the first blockchain from a service plane or a management plane. After obtaining the chain establishment requirement information, the upper-level LAF network element performs requirement decomposition on the chain establishment requirement information, to determine one or more network areas in which the first blockchain needs to be established.

For example, the chain establishment requirement information includes that a quantity of nodes that need to establish the first blockchain is 10, where five nodes are full nodes, three nodes are micro nodes, and two nodes are client nodes, and all the 10 nodes support a POW and POS consensus capability and have an editable capability. Therefore, the upper-level LAF network element decomposes the chain establishment requirement information based on blockchain capabilities in the three network areas RAN 1, RAN 2, and CN 1 and capabilities of three corresponding sub-LAF network elements (that is, a first sub-LAF network element to a third sub-LAF network element), to determine that the first blockchain needs to be established in the network area CN 1 and the network area RAN 1, so as to determine a requirement of the first blockchain in the network area CN 1 and a requirement of the first blockchain in the network area RAN 1.

For a specific implementation process of S801, refer to the related descriptions in S701.

S802: The upper-level LAF network element sends fifth indication information to a first sub-LAF network element. Correspondingly, the first LAF sub-network element receives the fifth indication information from the upper-level LAF network element.

The fifth indication information indicates a requirement of the first blockchain in the network area CN 1. For example, the fifth indication information may include that a quantity of nodes that establish the first blockchain in the network area CN 1 is 4, where there are three full nodes and one client node, and all the four nodes support a POW and POS consensus capability and have an editable capability.

S803: The upper-level LAF network element sends sixth indication information to a second sub-LAF network element. Correspondingly, the second sub-LAF network element receives the sixth indication information from the upper-level LAF network element.

The sixth indication information indicates a requirement of the first blockchain in the network area CN 1. For example, the requirement of the first blockchain in the network area RAN 1 may include that a quantity of nodes that establish the first blockchain in the network area RAN 1 is 6, where there are two full nodes, three micro nodes, and one client node, and all the six nodes support a POW and POS consensus capability and have an editable capability.

It may be understood that the fifth indication information in S802 and the sixth indication information in S803 have similar functions as the first indication information in S702. For specific descriptions of the fifth indication information and the sixth indication information, refer to the related descriptions of the first indication information in S702. Details are not described herein again.

S804: The first sub-LAF network element determines, based on the fifth indication information in the network area CN 1, a node configured to establish the first blockchain.

For example, after receiving the fifth indication information, the first sub-LAF network element may determine, based on a blockchain capability in the network area CN 1 and the fifth indication information, a node that meets an establishment requirement of the first blockchain. For example, the first sub-LAF network element selects an AMF network element, a UPF network element, an SMF network element, and a PC 1 in the network area CN 1 as nodes configured to establish the first blockchain. All of the AMF network element, the UPF network element, the SMF network element, and the PC 1 support a POW and POS consensus capability and have an editable capability, the AMF network element, the UPF network element, and the SMF network element may be used as full nodes, and the PC 1 may be used as a client node. In other words, the AMF network element, the UPF network element, the SMF network element, and the PC 1 are nodes that are configured to establish the first blockchain in the network area CN 1 and that are determined by the first sub-LAF network element.

For a specific implementation process of S804, refer to the related descriptions in S703. Details are not described herein again.

S805: The first sub-LAF network element sends a fourth configuration request to the node configured to establish the first blockchain in the network area CN 1. Correspondingly, the node configured to establish the first blockchain in the network area CN 1 receives the fourth configuration request from the first sub-LAF network element.

The fourth configuration request is used to perform blockchain capability configuration and activation on the node that is configured to establish the first blockchain and that is determined in the network area CN 1.

For example, after determining which nodes in the network area CN 1 can be used to establish the first blockchain, the first sub-LAF network element may send the fourth configuration request to the determined node, to configure the blockchain capability of the node. For example, the first sub-LAF network element configures the AMF network element, the UPF network element, and the SMF network element as full nodes, configures the PC 1 as a client node, and activates a POW and POS consensus capability and an editable capability of the four nodes.

S806: The node configured to establish the first blockchain in the network area CN 1 sends a fourth configuration response to the first sub-LAF network element. Correspondingly, the first sub-LAF network element receives the fourth configuration response from the node configured to establish the first blockchain in the network area CN 1.

The fourth configuration response notifies a blockchain capability configuration result of the node configured to establish the first blockchain in the network area CN 1.

When configuration succeeds, the fourth configuration response may carry an IP address, public key information, certificate information, a node type on the first blockchain, a node type in the network area CN 1, or the like of a node configured to establish the first blockchain in the network area CN 1.

For example, the fourth configuration response notifies that blockchain capability configuration of the node configured to establish the first blockchain in the network area CN 1 succeeds. In this case, the fourth configuration response fed back by the AMF network element may carry one or more of an IP address, public key information, or certificate information of the AMF network element, a type of the AMF network element that is a full node on the first blockchain, or a type of the AMF network element that is an NF node. Fourth configuration responses correspondingly fed back by the UPF network element, the SMF network element, and the PC 1 are similar to a fourth configuration response fed back by the AMF network element. Details are not described herein again.

When configuration fails, the first sub-LAF network element may reselect, in the network area CN 1, another node that meets an establishment requirement of the first blockchain.

S807: The second sub-LAF network element determines, based on the sixth indication information in the network area RAN 1, a node configured to establish the first blockchain.

For example, after receiving the sixth indication information, the second sub-LAF network element may determine, based on a blockchain capability in the network area RAN 1 and the sixth indication information, a node that meets an establishment requirement of the first blockchain. For example, the second sub-LAF network element selects a gNB 1, UE 1 to UE 3, UE 4, and a PC 2 in the network area RAN 1 as nodes configured to establish the first blockchain. All of the gNB 1, the UE 1 to the UE 3, the UE 4, and the PC 2 support a POW and POS consensus capability and have an editable capability, the gNB 1 and the UE 4 may be used as full nodes, the UE 1 to the UE 3 may be used as micro nodes, and the PC 2 may be used as a client node. In other words, the gNB 1, the UE 1 to the UE 3, the UE 4, and the PC 2 are nodes that are configured to establish the first blockchain in the network area CN 1 and that are determined by the second sub-LAF network element.

For a specific implementation process of S807, refer to the related description in S703 or S804. Details are not described herein again.

S808: The second sub-LAF network element sends a fifth configuration request to the node configured to establish the first blockchain in the network area RAN 1. Correspondingly, the node configured to establish the first blockchain in the network area RAN 1 receives the fifth configuration request from the second sub-LAF network element.

For example, the second sub-LAF network element configures the gNB 1 and the UE 4 as full nodes, configures the UE 1 to the UE 3 as micro nodes, configures the PC 2 as a client node, and activates a POW and POS consensus capability and an editable capability of the six nodes.

For a specific implementation process of S808, refer to the related descriptions in S805. Details are not described herein again.

It may be understood that the fourth configuration request in S805 and the fifth configuration request in S808 have similar functions as the second configuration request in S703. Therefore, for specific descriptions of the fourth configuration request and the fifth configuration request, refer to the related descriptions of the second configuration request in S703.

S809: The node configured to establish the first blockchain in the network area RAN 1 sends a fifth configuration response to the second sub-LAF network element. Correspondingly, the second sub-LAF network element receives the fifth configuration response from the node configured to establish the first blockchain in the network area RAN 1.

The fifth configuration response notifies a blockchain capability configuration result of the node configured to establish the first blockchain in the network area RAN 1. For example, the gNB 1, the UE 1 to the UE 3, the UE 4, and the PC 2 in the network area RAN 1 each feed back a corresponding fifth configuration response. For specific descriptions of the fifth configuration response, refer to the related descriptions of the fourth configuration response in S806. Details are not described herein again.

It may be understood that the fourth configuration response in S806 and the fifth configuration response in S809 have similar functions as the second configuration response in S703. Therefore, for specific descriptions of the fourth configuration response and the fifth configuration response, refer to the related descriptions of the second configuration response in S703. Details are not described herein again.

S810: The first sub-LAF network element sends seventh indication information to the upper-level LAF network element. Correspondingly, the upper-level LAF network element receives the seventh indication information from the first sub-LAF network element.

The seventh indication information indicates one or more nodes configured to establish the first blockchain in the network area CN 1. For example, the first sub-LAF network element summarizes node information fed back by the AMF network element, the UPF network element, the SMF network element, and the PC 1, and feeds back the node information to the upper-level LAF network element through the seventh indication information.

S811: The second sub-LAF network element sends eighth indication information to the upper-level LAF network element. Correspondingly, the upper-level LAF network element receives the eighth indication information from the second sub-LAF network element.

The eighth indication information indicates one or more nodes configured to establish the first blockchain in the network area RAN 1. For example, the second sub-LAF network element summarizes node information fed back by the gNB 1, the UE 1 to the UE 3, the UE 4, and the PC 2, and feeds back the node information to the upper-level LAF network element through the eighth indication information.

Functions of the seventh indication information in S810 and the eighth indication information in S811 are similar to a function of the second indication information in S704. Therefore, for specific descriptions of the seventh indication information and the eighth indication information, refer to the related descriptions of the second indication information in S704. Details are not described herein again.

It should be noted that, after nodes configured to establish the first blockchain are determined in the network area CN 1 and the network area RAN 1 in S801 to S811, if communication needs to be performed between nodes configured to establish the first blockchain in the network area CN 1 and/or between nodes configured to establish the first blockchain in the network area RAN 1, that is, nodes configured to establish the first blockchain in a same network area communicate with each other, the first sub-LAF network element may send an intra-domain communication configuration request to a node that needs intra-domain communication and that is configured to establish the first blockchain. The intra-domain communication configuration request carries intra-domain communication configuration information. For example, the AMF network element and the PC 1 in the network area CN 1 need to communicate with each other. The first sub-LAF network element sends an IP address of the PC 1 to the AMF network element, and the AMF network element may communicate with the PC 1 based on the IP address of the PC 1. The first sub-LAF network element may further send, to the AMF network element, information such as public key information of the PC 1, certificate information of the PC 1, and a node type of the PC 1 on the first blockchain. For a process of configuring intra-domain node communication in the network area RAN 1, refer to a process of configuring intra-domain node communication in the network area CN 1. Details are not described herein again. Correspondingly, after completing communication configuration, a node that configures intra-domain communication and that is configured to establish the first blockchain may send an intra-domain communication configuration response to a sub-LAF network element in a network area in which the node is located.

It may be understood that the intra-domain communication configuration request has a similar function as the third configuration request in S704, and the intra-domain communication configuration response has a similar function as the third configuration response in S704. Details are not described herein again.

Based on S801 to S812, a process of establishing a blockchain in a plurality of network areas in the hierarchical LAF network element architecture is implemented.

In addition, when the node configured to establish the first blockchain in the network area RAN 1 needs to communicate with the node configured to establish the first blockchain in the network area CN 1, the blockchain establishment method shown in FIG. 8 further includes the following steps.

S812: The upper-level LAF network element sends a first cross-domain configuration request to the first sub-LAF network element. Correspondingly, the first sub-LAF network element receives the first cross-domain configuration request from the upper-level LAF network element.

The first cross-domain configuration request is used to request the first sub-LAF network element to configure communication between a node configured to establish the first blockchain in the network area CN 1 and a node configured to establish the first blockchain in the network area RAN 1.

For example, if the AMF network element in the network area CN 1 needs to communicate with the gNB 1 and the UE 4 in the network area RAN 1, the sixth configuration request may include information about the gNB 1 and information about the UE 4, for example, an IP address of the gNB 1, an IP address of the UE 4, public key information of the gNB 1, public key information of the UE 4, certificate information of the gNB 1, and certificate information of the UE 4.

S813: The upper-level LAF network element sends a second cross-domain configuration request to the second sub-LAF network element. Correspondingly, the second sub-LAF network element receives the second cross-domain configuration request from the upper-level LAF network element.

The second cross-domain configuration request is used to request the second sub-LAF network element to configure communication between a node configured to establish the first blockchain in the network area RAN 1 and a node configured to establish the first blockchain in the network area CN 1.

For example, if the gNB 1 and the UE 4 in the network area RAN 1 need to communicate with the AMF network element in the network area CN 1, the second cross-domain configuration request may include information about the AMF network element, for example, an IP address of the AMF network element, public key information of the AMF network element, and certificate information of the AMF network element.

It may be understood that the first cross-domain configuration request in S812 and the second cross-domain configuration request in S813 have similar functions as the first configuration request in S703. Therefore, for specific descriptions of the first cross-domain configuration request and the second cross-domain configuration request, refer to the related descriptions of the first configuration request in S703. Details are not described herein again.

It should be noted that, for S812 and S813, the upper-level LAF network element may alternatively perform only S812 or only S813, to implement communication between a node in the network area CN 1 and a node in the network area RAN 1. That is, for nodes that need to communicate with each other in two network areas, communication between the nodes in the two network areas can be implemented only by obtaining, by a node in one network area, information about communication with a node in another network area. Correspondingly, in a subsequent implementation process, only S814, S815, and S818 need to be performed, or only S816, S817, and S819 need to be performed.

S814: The first sub-LAF network element sends a third cross-domain configuration request to the node configured to establish the first blockchain in the network area CN 1. Correspondingly, the node configured to establish the first blockchain in the network area CN 1 receives the third cross-domain configuration request from the first sub-LAF network element.

The third cross-domain configuration request is used to configure communication between the node configured to establish the first blockchain in the network area CN 1 and one or more nodes configured to establish the first blockchain in the network area RAN 1. For example, the third cross-domain configuration request carries an IP address of the gNB 1, an IP address of the UE 4, public key information of the gNB 1, public key information of the UE 4, certificate information of the gNB 1, and certificate information of the UE 4. The first sub-LAF network element sends the third cross-domain configuration request to the AMF network element, to configure communication between the AMF network element in the network area CN 1 and the gNB 1 and the UE 4 in the network area RAN 1.

S815: The node configured to establish the first blockchain in the network area CN 1 sends a third cross-domain configuration response to the first sub-LAF network element. Correspondingly, the first LAF sub-network element receives the third cross-domain configuration response from the node configured to establish the first blockchain in the network area CN 1.

The third cross-domain configuration response notifies a cross-domain communication configuration result of the node configured to establish the first blockchain in the network area CN 1. For example, the AMF network element sends the third cross-domain configuration response to the first sub-LAF network element, to notify that cross-domain communication configuration of an AMF network element succeeds, indicating that the AMF network element can communicate with a gNB 1 and UE 4 in the network area RAN 1.

S816: The second sub-LAF network element sends a fourth cross-domain configuration request to the node configured to establish the first blockchain in the network area RAN 1. Correspondingly, the node configured to establish the first blockchain in the network area RAN 1 receives the fourth cross-domain configuration request from the second sub-LAF network element.

The fourth cross-domain configuration request is used to configure communication between the node configured to establish the first blockchain in the network area RAN 1 and one or more nodes configured to establish the first blockchain in the network area CN 1. For example, the fourth cross-domain configuration request carries an IP address of the gNB 1, an IP address of the UE 4, public key information of the gNB 1, public key information of the UE 4, certificate information of the gNB 1, and certificate information of the UE 4, to configure communication between the AMF network element in the network area CN 1 and the gNB 1 and the UE 4 in the network area RAN 1. The second sub-LAF network element sends the fourth cross-domain configuration request to the AMF network element, to configure communication between the gNB 1 and the UE 4 in the network area RAN 1 and the AMF network element in the network area CN 1.

S817: The node configured to establish the first blockchain in the network area RAN 1 sends a fourth cross-domain configuration response to the second sub-LAF network element. Correspondingly, the second sub-LAF network element receives the fourth cross-domain configuration response from the node configured to establish the first blockchain in the network area RAN 1.

The fourth cross-domain configuration response notifies a cross-domain communication configuration result of the node configured to establish the first blockchain in the network area RAN 1. For example, a gNB 1 sends a fourth cross-domain configuration response to the second sub-LAF network element, to notify that cross-domain communication configuration of the gNB 1 succeeds, indicating that the gNB1 can communicate with an AMF network element in the network area CN 1. For another example, UE 4 sends a fourth cross-domain configuration response to the second sub-LAF network element, to notify that cross-domain communication configuration of the UE 4 succeeds, indicating that the UE 4 can communicate with an AMF network element in the network area CN 1.

S818: The first sub-LAF network element sends a first cross-domain configuration response to the upper-level LAF network element. Correspondingly, the upper-level LAF network element receives the first cross-domain configuration response from the first sub-LAF network element.

The first cross-domain configuration response notifies a cross-domain communication configuration result of one or more nodes configured to establish the first blockchain in the network area CN 1. For example, if there is only one node, for example, the AMF network element, in the network area CN 1 that needs to communicate with a node configured to establish the first blockchain in the network area RAN 1, the first cross-domain configuration response notifies a cross-domain communication configuration result of the AMF network element. In this case, the first cross-domain configuration response may be the third cross-domain configuration response in S815.

For another example, if there are a plurality of nodes, such as the AMF network element and the UPF network element, in the network area CN 1 that need to communicate with a node configured to establish the first blockchain in the network area RAN 1, the first cross-domain configuration response notifies cross-domain communication configuration results of the AMF network element and the UPF network element, that is, the first sub-LAF network element summarizes cross-domain communication configuration results of the plurality of nodes and feeds back the cross-domain communication configuration results to the upper-level LAF network element.

S819: The second sub-LAF network element sends a second cross-domain configuration response to the upper-level LAF network element. Correspondingly, the upper-level LAF network element receives the second cross-domain configuration response from the second sub-LAF network element.

The second cross-domain configuration response notifies a cross-domain communication configuration result of one or more nodes configured to establish the first blockchain in the network area RAN 1. For a specific implementation process of S819, refer to the related descriptions in S818. Details are not described herein again.

It may be understood that the first cross-domain configuration response in S818 and the second cross-domain configuration response in S819 have similar functions as the first configuration response in S703. Therefore, for specific descriptions of the first cross-domain configuration response and the second cross-domain configuration response, refer to the related description of the first configuration response in S703. Details are not described herein again.

According to the blockchain establishment method shown in FIG. 8, based on a hierarchical LAF network element architecture, a process of establishing the first blockchain in a plurality of network areas is implemented, and cross-domain communication between blockchain nodes in different network areas is implemented.

FIG. 7 and FIG. 8 show blockchain creation and management implemented based on the hierarchical LAF network element architecture. An embodiment of this application further provides a blockchain establishment method implemented based on a distributed LAF network element architecture, to establish blockchains in a plurality of network areas.

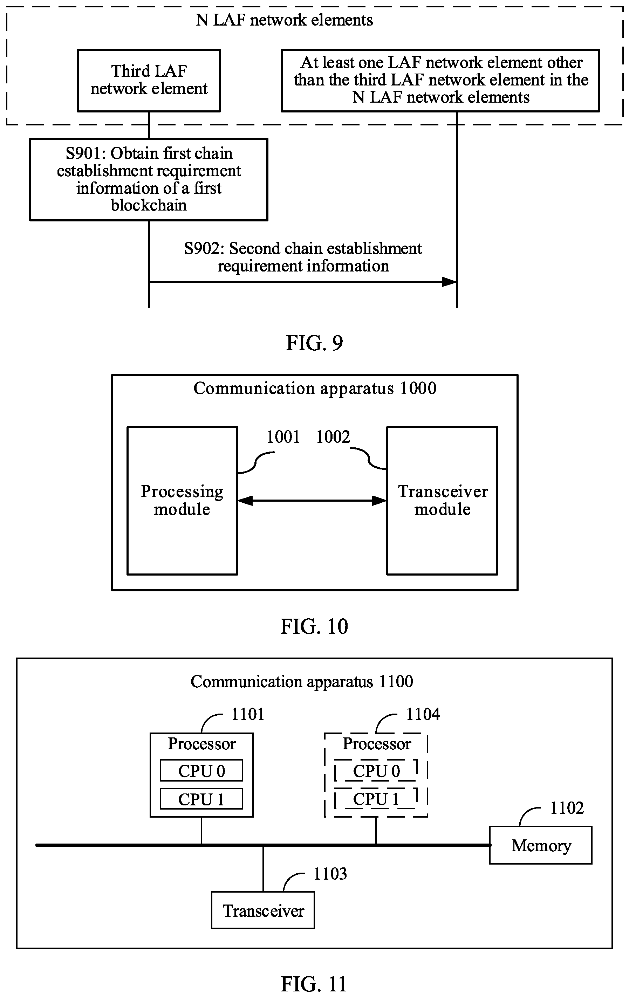

For example, FIG. 9 is a schematic flowchart of still another blockchain establishment method according to an embodiment of this application. The method may be applied to (b) or (c) in FIG. 2, or may be applied to (b) or (d) in FIG. 4.

As shown in FIG. 9, the blockchain establishment method includes the following steps.

S901: A third LAF network element obtains first chain establishment requirement information of a first blockchain.

The third LAF network element is one ofN LAF network elements that jointly create the first blockchain, N is a positive integer greater than 1, and the N LAF network elements are LAF network elements at a same level.

In a possible design solution, the N LAF network elements may be sub-LAF network elements distributed in different network areas in a same operator network, or may be slice-level sub-LAF network elements distributed in different function domains in a same network slice. Therefore, the third LAF network element may obtain the first chain establishment requirement information of the first blockchain from an upper-level LAF network element that manages the third LAF network element. For example, the third LAF network element receives the first chain establishment requirement information of the first blockchain from a first LAF network element. Correspondingly, the first LAF network element sends the first chain establishment requirement information of the first blockchain to the third LAF network element. The first LAF network element is configured to manage the N LAF network elements. In other words, the first LAF network element is an upper-level LAF network element in the N LAF network elements, and the N LAF network elements are sub-LAF network elements or lower-level LAF network elements of the first LAF network element. In this scenario, the N LAF network elements may implement distributed chain establishment in a single operator network or a single network slice.

For example, N=3, and the three LAF network elements are an LAF 1 to an LAF 3. In the scenario shown in (b) in FIG. 2, the LAF 1 to the LAF 3 respectively correspond to a sub-LAF network element in the network area CN 1, a sub-LAF network element in the network area RAN 1, and a sub-LAF network element in the network area RAN 2. The first LAF network element is an upper-level LAF network element shown in (b) in FIG. 2. The third LAF network element is a sub-LAF network element (that is, the LAF 1) in the network area CN 1. Therefore, after receiving the first chain establishment requirement information of the first blockchain from a service plane or a management plane, the upper-level LAF network element determines, based on the first chain establishment requirement information, that the first blockchain needs to be established in the plurality of network areas, for example, the first blockchain needs to be established in the RAN 1, the RAN 2, and the CN 1. In this case, the upper-level LAF network element may send the first chain establishment requirement information to the sub-LAF network element in the network area CN 1, and indicates the sub-LAF network element in the network area CN 1 to negotiate with the sub-LAF network element in the network area RAN 1 and the sub-LAF network element in the network area RAN 2 to establish the first blockchain, that is, indicates the LAF 1 to negotiate with the LAF 2 and the LAF 3 to establish the first blockchain.

For another example, N=2, and the two LAF network elements are an LAF 1 and an LAF 2. In the scenario shown in (b) in FIG. 4, the LAF 1 and the LAF 2 respectively correspond to a slice-level sub-LAF network element in the RAN function domain and a slice-level sub-LAF network element in the CN function domain. The first LAF network element is the slice-level LAF network element shown in (b) in FIG. 4. The slice-level sub-LAF network element (that is, the LAF 1) in the RAN function domain is a third LAF network element. Therefore, after receiving the first chain establishment requirement information of the first blockchain from a service plane or a management plane, the slice-level LAF network element determines, based on the first chain establishment requirement information, that the first blockchain needs to be established in the plurality of network areas, for example, the first blockchain needs to be established in the RAN function domain and the CN function domain. In this case, the slice-level LAF network element may send the first chain establishment requirement information to the slice-level sub-LAF network element in the RAN function domain, and indicates the slice-level sub-LAF network element in the RAN function domain to negotiate with the slice-level sub-LAF network element in the CN function domain to establish the first blockchain.

In another possible design solution, the N LAF network elements are upper-level LAF network elements distributed in different operator networks shown in (c) in FIG. 2, or slice-level LAF network elements distributed in different network slices shown in (d) in FIG. 4. In this scenario, the N LAF network elements may implement distributed chain establishment across operator networks or across network slices.

For example, N=3, and the three LAF network elements are an LAF 1 to an LAF 3. In the scenario shown in (c) in FIG. 2, the first blockchain is established in three operator networks, and the LAF 1 to the LAF 3 respectively correspond to upper-level LAF network elements in the CN 1 to the CN 3. The upper-level LAF network element (LAF 3) in the CN 3 is a third LAF network element. The upper-level LAF network element in the CN 3 may receive the first chain establishment requirement information of the first blockchain from a service plane or a management plane.

For another example, N=3, and the three LAF network elements are an LAF 1 to an LAF 3. In the scenario shown in (d) in FIG. 4, the first blockchain is established in three network slices, and the LAF 1 to the LAF 3 respectively correspond to slice-level LAF network elements in the NSI 1 to the NSI 3. The slice-level LAF network element (that is, the LAF 1) in the NSI 1 is a third LAF network element. The slice-level LAF network element in the NSI 1 may receive the first chain establishment requirement information of the first blockchain from a service plane, a management plane, or the top-level LAF network element shown in FIG. 3(b).

For specific descriptions of the first chain establishment requirement information, refer to the related descriptions of the chain establishment requirement information in S701. Details are not described herein again.

S902: The third LAF network element sends, according to a blockchain creation policy, second chain establishment requirement information to at least one LAF network element other than the third LAF network element in the N LAF network elements.

The blockchain creation policy is a policy that is deployed in the N LAF network elements and that is used to determine that each LAF network element establishes the first blockchain. In this embodiment of this application, the blockchain creation policy may be preconfigured by an operator, may be obtained by the N LAF network elements through negotiation, may be generated based on a blockchain consensus, or may be determined based on a common operation. That the blockchain creation policy is generated based on the blockchain consensus means that a plurality of LAF network elements obtain one blockchain creation policy according to a same consensus mechanism, and that the blockchain creation policy is determined based on the common operation means that a plurality of LAF network elements obtain one blockchain creation policy according to a same algorithm (for example, a random algorithm).

For example, the third LAF network element may determine, according to the blockchain creation policy, one or more LAF network elements other than the third LAF network element in the N LAF network elements to send the second chain establishment requirement information.

In a possible design solution, the second chain establishment requirement information may be the first chain establishment requirement information. In other words, the second chain establishment requirement information is the same as the first chain establishment requirement information.

For example, in embodiments of this application, the following two scenarios are used to describe that the second chain establishment requirement information sent by the third LAF network element is the same as the first chain establishment requirement information:

Scenario 1: The third LAF network element may send, according to the blockchain creation policy, the second chain establishment requirement information to all LAF network elements except the third LAF network element in the N LAF network elements.

In this scenario, the blockchain creation policy may be that each of the N LAF network elements selects equivalent chain establishment requirement information from the first chain establishment requirement information to create a blockchain. In other words, the N LAF network elements select corresponding chain establishment requirement information by equivalently and equally dividing the first chain establishment requirement information. Therefore, the third LAF network element may send, in a broadcast manner, the first chain establishment requirement information to all LAF network elements except the third LAF network element in the N LAF network elements.

It should be noted that, equivalently and equally dividing the first chain establishment requirement information includes equally dividing a total quantity of nodes that establish the first blockchain and evenly dividing capabilities of the nodes that establish the first blockchain.

For example, N=3, and the three LAF network elements are an LAF 1 to an LAF 3. The LAF 1 is the third LAF network element, and a blockchain creation policy deployed in the LAF 1 to the LAF 3 is selecting corresponding chain establishment requirement information by equivalently and equally dividing the first chain establishment requirement information. For example, the first chain establishment requirement information indicates that 12 nodes are needed for establishing the first blockchain in three network areas, where six full nodes, three micro nodes, and three client nodes are needed, and at least six of the 12 nodes have a smart contract capability and a POS consensus capability. In this case, each of the three LAF network elements selects four nodes in a network area of the LAF network element, where two full nodes, one micro node, and three client nodes are needed, and at least two of the four nodes have a smart contract capability and a POS consensus capability. Therefore, after the LAF 1 sends the first chain establishment requirement information to the LAF 2 and the LAF 3 in a broadcast manner, the LAF 1 to the LAF 3 all select equivalent chain establishment requirement information from the first chain establishment requirement information according to an equivalent and equal division principle as a requirement for establishing the first blockchain.

Scenario 2: The third LAF network element may send the second chain establishment requirement information to a fourth LAF network element according to a blockchain creation policy, where the fourth LAF network element is an LAF network element that preferentially selects chain establishment requirement information from the first chain establishment requirement information in the N LAF network elements.

In this scenario, the N LAF network elements select corresponding chain establishment requirement information from the first chain establishment requirement information in a priority sequence, and the third LAF network element is not an LAF network element with a highest priority in the N LAF network elements. The blockchain creation policy may be creating a blockchain in a sequence of capabilities of LAF network elements, or creating a blockchain based on a blockchain capability in a network area corresponding to an LAF network element. The sequence of the capabilities of the LAF network elements or the blockchain capability in the network area corresponding to the LAF network element is a priority sequence of selecting corresponding chain establishment requirement information from the first chain establishment requirement information.

The sequence of the capabilities of the LAF network elements may be an ascending order of the capabilities of the LAF network elements, or may be a descending order of the capabilities of the LAF network elements. The blockchain capability in the network area corresponding to the LAF network element may be a blockchain capability such as whether to support a full node capability, to support a consensus capability, to support an editable capability, to have a smart contract capability, or to have a trusted execution environment in the network area corresponding to the LAF network element. For example, a blockchain capability in a network area corresponding to an LAF 1 is supporting a full node capability, supporting a consensus capability, supporting editable, having a smart contract capability, and having a trusted execution environment, and a blockchain capability in a network area corresponding to an LAF 2 is supporting a full node capability, not supporting a consensus capability, not supporting editable, not having a smart contract capability, and having a trusted execution environment, and a blockchain capability in a network area corresponding to the LAF 2 is not supporting a full node capability, supporting a consensus capability, not supporting editable, having a smart contract capability, and not having a trusted execution environment. It should be understood that a priority sequence may also be set for blockchain capabilities of network areas corresponding to LAF network elements.

It may be understood that, in the foregoing two blockchain creation policies, capabilities of LAF network elements or a blockchain capability in a network area corresponding to each LAF network element may be obtained by the third LAF by polling each LAF network element other than the third LAF network element in the N LAF network elements.

For example, N=3, and the three LAF network elements are an LAF 1 to an LAF 3. The LAF 1 is the third LAF network element, a blockchain creation policy deployed in the LAF 1 to the LAF 3 is creating a blockchain in descending order of capabilities of the LAF network elements, and the capabilities of the LAF 1 to the LAF 3 in descending order are sequentially: LAF 2 > LAF 1 > LAF 3. The first chain establishment requirement information indicates that 12 nodes are needed for establishing the first blockchain in the three network areas, where six full nodes, three micro nodes, and three client nodes are needed, and at least six of the 12 nodes have a smart contract capability and a POS consensus capability.

Therefore, after obtaining the first chain establishment requirement information, the LAF 1 determines, according to the blockchain creation policy, that the LAF 1 is not an LAF network element with a strongest LAF network element capability in the three LAF network elements, and sends the first chain establishment requirement information to an LAF network element with a strongest LAF network element capability, that is, the fourth LAF network element is the LAF 2. Further, the LAF 2 selects some chain establishment requirement information from the first chain establishment requirement information as a task for establishing the first blockchain by the LAF 2. For example, the chain establishment requirement information selected by the LAF 2 is that five nodes are needed for establishing the first blockchain in a network area of the LAF 2, where three nodes are full nodes, two nodes are client nodes, and the five nodes have a smart contract capability and a POS consensus capability. After the LAF 2 is selected, the LAF 2 determines, according to a blockchain creation policy, that a next LAF network element with a relatively strong capability selects some chain establishment requirement information from remaining first chain establishment requirement information as a task for establishing the first blockchain by the next LAF network element. For example, the next selected LAF network element is the LAF 1. After selecting a chain establishment requirement from the remaining first chain establishment requirement information, the LAF 1 sends last remaining first chain establishment requirement information to the LAF 3. Therefore, the LAF 1 to the LAF 3 may separately establish, based on the chain establishment requirement information that is correspondingly selected by the LAF 1 to the LAF 3, a blockchain in the network areas in which the LAF 1 to the LAF 3 are located.

It may be understood that the LAF 1 to the LAF 3 may separately select the chain establishment requirement information from the first chain establishment requirement information based on blockchain capabilities in the network areas in which the LAF 1 to the LAF 3 are located.

In another possible design solution, the second chain establishment requirement information is chain establishment requirement information other than third chain establishment requirement information in the first chain establishment requirement information, and the third chain establishment requirement information is some chain establishment requirement information selected by the third LAF network element from the first chain establishment requirement information according to a blockchain creation policy. That is, the second chain establishment requirement information is different from the first chain establishment requirement information.

Therefore, the third LAF network element may send the second chain establishment requirement information to a fifth LAF network element according to the blockchain creation policy, and the fifth LAF network element is a next LAF network element that selects chain establishment requirement information in the N LAF network elements.

In this case, the N LAF network elements select corresponding chain establishment requirement information from the first chain establishment requirement information in a priority sequence, and the third LAF network element is an LAF network element with a highest priority in the N LAF network elements. Alternatively, the blockchain creation policy may be creating a blockchain in a sequence of capabilities of LAF network elements, or creating a blockchain based on a blockchain capability in a network area corresponding to an LAF network element.

Therefore, after receiving the first chain establishment requirement information, the third LAF network element selects some chain establishment requirement information (that is, the third chain establishment requirement information) from the first chain establishment requirement information according to the blockchain creation policy, and then sends the chain establishment requirement information (that is, the second chain establishment requirement information) other than the third chain establishment requirement information in the first chain establishment requirement information to the next LAF network element that selects chain establishment requirement information, that is, the fifth LAF network element.

For example, N=3, and the three LAF network elements are an LAF 1 to an LAF 3. The LAF 1 is the third LAF network element, a blockchain creation policy deployed in the LAF 1 to the LAF 3 is creating a blockchain in descending order of capabilities of the LAF network elements, and the capabilities of the LAF 1 to the LAF 3 in descending order are sequentially: LAF 1 > LAF 3 > LAF 2. The first chain establishment requirement information indicates that 12 nodes are needed for establishing the first blockchain in the three network areas, where six full nodes, three micro nodes, and three client nodes are needed, and at least six of the 12 nodes have a smart contract capability and a POS consensus capability.

Therefore, the third chain establishment requirement information selected by the LAF 1 from the first chain establishment requirement information includes that five nodes are needed for establishing the first blockchain in the network area of the LAF 1, where three nodes are full nodes, two nodes are client nodes, and the five nodes have a smart contract capability and a POS consensus capability. In this case, the second chain establishment requirement information includes that seven nodes are needed for establishing the first blockchain, where three full nodes, three micro nodes, and one client node are needed, and at least one of the seven nodes has a smart contract capability and a POS consensus capability. Then, the LAF 1 sends the second chain establishment requirement information to a next LAF network element with a relatively strong capability, that is, the LAF 3. The LAF 3 selects some chain establishment requirement information from the second chain establishment requirement information, and then sends remaining chain establishment requirement information to the LAF 1. Therefore, the LAF 1 to the LAF 3 may separately establish, based on the chain establishment requirement information that is correspondingly selected by the LAF 1 to the LAF 3, a blockchain in the network areas in which the LAF 1 to the LAF 3 are located.

It should be noted that in a scenario in which the N LAF network elements are N lower-level LAF network elements in a single network area or a single network slice, the N LAF network elements may select, based on chain establishment requirement information correspondingly selected from the first chain establishment requirement information, a node in a corresponding network area to establish the first blockchain. For a specific process, refer to the related descriptions in S703. Details are not described herein again.

In a scenario in which the N LAF network elements are N upper-level LAF network elements in a plurality of operator networks or a plurality of network slices, if one or more lower-level LAF network elements are further deployed in each operator network or each network slice, an upper-level LAF network element in each operator network may correspondingly select chain establishment requirement information from the first chain establishment requirement information, select one or more lower-level LAF network elements in a manner of hierarchically establishing the first blockchain shown in FIG. 7 or FIG. 8 or a manner of distributedly establishing the first blockchain shown in FIG. 9, and establish the first blockchain in a network area in which the lower-level LAF network element is located. Details are not described herein again.

According to the blockchain establishment method shown in FIG. 9, when establishing the first blockchain in a plurality of network areas, a plurality of LAF network elements may select corresponding chain establishment requirement information from the first chain establishment requirement information in a distributed manner according to the blockchain creation policy, so that the first blockchain can be established in a corresponding network area.

It may be understood that, in the foregoing embodiments, the method and/or the step implemented by the first LAF network element may be implemented by a component (for example, a processor, a chip, a chip system, a circuit, a logic module, or software) that can be used in the first LAF network element; the method and/or the step implemented by the second LAF network element may be implemented by a component (for example, a processor, a chip, a chip system, a circuit, a logic module, or software) that can be used in the second LAF network element; and the method and/or the step implemented by the third LAF network element may be implemented by a component (for example, a processor, a chip, a chip system, a circuit, a logic module, or software) used in the third LAF network element.

The foregoing mainly describes the solutions provided in this application. Correspondingly, this application further provides a communication apparatus. The communication apparatus is configured to implement the methods in the foregoing method embodiments. The communication apparatus may be the first LAF network element in the foregoing method embodiments, or an apparatus including the first LAF network element, or a component, for example, a chip or a chip system, that can be used in the first LAF network element. Alternatively, the communication apparatus may be the second LAF network element in the foregoing method embodiments, or an apparatus including the second LAF network element, or a component, for example, a chip or a chip system, that can be used in the second LAF network element. Alternatively, the communication apparatus may be the third LAF network element in the foregoing method embodiments, or an apparatus including the third LAF network element, or a component, for example, a chip or a chip system, that can be used in the third LAF network element.

It may be understood that, to implement the foregoing functions, the communication apparatus includes a hardware structure and/or a software module for performing a corresponding function. A person skilled in the art should be easily aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in an actual implementation.

For example, the communication apparatus is the terminal device or the network device in the foregoing method embodiments. FIG. 10 is a diagram of a structure of a communication apparatus according to an embodiment of this application. As shown in FIG. 10, the communication apparatus 1000 includes a processing module 1001 and a transceiver module 1002. The processing module 1001 is configured to perform a processing function of the terminal device or the network device in the foregoing method embodiments. The transceiver module 1002 is configured to perform receiving and sending functions of the terminal device or the network device in the foregoing method embodiments.

Optionally, in this embodiment of this application, the transceiver module 1002 may include a receiving module and a sending module (not shown in FIG. 10). The transceiver module is configured to implement a sending function and a receiving function of the communication apparatus 1000.

Optionally, the communication apparatus 1000 may further include a storage module (not shown in FIG. 10). The storage module stores a program or instructions. When the processing module 1001 executes the program or the instructions, the communication apparatus 1000 is enabled to perform a function of the first LAF network element, the second LAF network element, or the third LAF network element in the method shown in any one of FIG. 7 to FIG. 9.

It should be understood that the processing module 1001 in the communication apparatus 1000 may be implemented by a processor or a processor-related circuit component, and may be a processor or a processing unit. The transceiver module 1002 may be implemented by a transceiver or a transceiver-related circuit component, and may be a transceiver or a transceiver unit.

All related content of the steps in the foregoing method embodiments may be cited in function descriptions of the corresponding functional modules. Details are not described herein again.

The communication apparatus 1000 provided in this embodiment may perform the foregoing methods. Therefore, for technical effects that can be achieved by the communication apparatus 1000, refer to the foregoing method embodiments. Details are not described herein again.

For example, FIG. 11 is a diagram of a structure of another communication apparatus according to an embodiment of this application. The communication apparatus may be a first LAF network element, a second LAF network element, or a third LAF network element, or may be a chip (system) or another part or component that may be disposed in the first LAF network element, the second LAF network element, or the third LAF network element. As shown in FIG. 11, the communication apparatus 1100 may include a processor 1101. Optionally, the communication apparatus 1100 may further include a memory 1102 and/or a transceiver 1103. The processor 1101 is coupled to the memory 1102 and the transceiver 1103, for example, may be connected through a communication bus.

The following describes components of the communication apparatus 1100 in detail with reference to FIG. 11.

The processor 1101 is a control center of the communication apparatus 1100, and may be one processor, or may be a general term of a plurality of processing elements. For example, the processor 1101 is one or more central processing units (central processing unit, CPU), may be an application-specific integrated circuit (application-specific integrated circuit, ASIC), or is configured as one or more integrated circuits for implementing embodiments of this application, for example, one or more microprocessors (digital signal processor, DSP) or one or more field programmable gate arrays (field programmable gate array, FPGA).

Optionally, the processor 1101 may perform various functions of the communication apparatus 1100 by running or executing a software program stored in the memory 1102 and invoking data stored in the memory 1102.

In a specific implementation, in an embodiment, the processor 1101 may include one or more CPUs, for example, a CPU 0 and a CPU 1 shown in FIG. 11.

In a specific implementation, in an embodiment, the communication apparatus 1100 may alternatively include a plurality of processors, for example, the processor 1101 and a processor 1104 shown in FIG. 11. Each of the processors may be a single-core processor (single-CPU), or may be a multi-core processor (multi-CPU). The processor herein may be one or more devices, circuits, and/or processing cores configured to process data (for example, computer program instructions).

The memory 1102 is configured to store a software program for performing the solutions in this application, and the processor 1101 controls execution of the software program. For a specific implementation, refer to the foregoing method embodiments. Details are not described herein again.

Optionally, the memory 1102 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instruction or data structure and that can be accessed by a computer. However, this is not limited thereto. The memory 1102 may be integrated with the processor 1101, or may exist independently, and is coupled to the processor 1101 through an interface circuit (not shown in FIG. 11) of the communication apparatus 1100. This is not specifically limited in this embodiment of this application.

The transceiver 1103 is configured to communicate with another communication apparatus. For example, the communication apparatus 1100 is a terminal device, and the transceiver 1103 may be configured to communicate with a network device or communicate with another terminal device. For another example, the communication apparatus 1100 is a network device, and the transceiver 1103 may be configured to communicate with a terminal device or communicate with another network device.

Optionally, the transceiver 1103 may include a receiver and a transmitter (not separately shown in FIG. 11). The receiver is configured to implement a receiving function, and the transmitter is configured to implement a sending function.

Optionally, the transceiver 1103 may be integrated with the processor 1101, or may exist independently, and is coupled to the processor 1101 through an interface circuit (not shown in FIG. 11) of the communication apparatus 1100. This is not specifically limited in this embodiment of this application.

It should be noted that the structure of the communication apparatus 1100 shown in FIG. 11 does not constitute a limitation on the communication apparatus. An actual communication apparatus may include more or fewer components than those shown in the figure, combine some components, or have different component arrangements.

In addition, for technical effects of the communication apparatus 1100, refer to the technical effects of the method in the foregoing method embodiments. Details are not described herein again.

An embodiment of this application provides a communication system. The communication system includes the first LAF network element and the second LAF network element.

An embodiment of this application provides another communication device. The communication system includes the N LAF network elements, and the N LAF network elements include the third LAF network element.

An embodiment of this application further provides a computer-readable storage medium. The computer-readable storage medium stores a computer program or instructions. When the computer program or the instructions are executed by a computer, functions of the foregoing method embodiments are implemented.

An embodiment of this application further provides a computer program product. When the computer program product is executed by a computer, functions of the foregoing method embodiments are implemented.

It should be understood that the term "and/or" in this specification describes only an association relationship between associated objects and indicates that three relationships may exist. For example, A and/or B may indicate the following three cases: Only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A blockchain establishment method, wherein the method comprises:
obtaining, by a first ledger anchor function LAF network element, chain establishment requirement information of a first blockchain; and
sending, by the first LAF network element, first indication information to a second LAF network element corresponding to a first network area, wherein the first indication information is determined based on the chain establishment requirement information, and the first indication information indicates a requirement of the first blockchain in the first network area.

2. The method according to claim 1, wherein the method further comprises:
receiving, by the first LAF network element, second indication information from the second LAF network element, wherein the second indication information indicates one or more first nodes configured to establish the first blockchain in the first network area.

3. The method according to claim 1 or 2, wherein the method further comprises:
sending, by the first LAF network element, a first configuration request to the second LAF network element, wherein the first configuration request comprises information about one or more second nodes, the second node is configured to communicate with the one or more first nodes configured to establish the first blockchain in the first network area, and the second node is a node in a network area other than the first network area and is configured to establish the first blockchain.

4. The method according to claim 3, wherein the method further comprises:
receiving, by the first LAF network element, a first configuration response from the second LAF network element, wherein the first configuration response notifies a cross-domain communication configuration result of the one or more first nodes.

5. The method according to any one of claims 1 to 4, wherein the method further comprises:
receiving, by the first LAF network element, third indication information from the second LAF network element, wherein the third indication information indicates a blockchain capability in the first network area.

6. The method according to any one of claims 1 to 5, wherein the method further comprises:
sending, by the first LAF network element, fourth indication information to the second LAF network element, wherein the fourth indication information indicates the second LAF network element to deploy a blockchain capability for one or more fifth nodes in the first network area, and the fifth node is a node that does not have a blockchain capability in the first network area.

7. The method according to any one of claims 1 to 6, wherein the first indication information comprises at least one of the following: a quantity of nodes needed by the first blockchain in the first network area, a node type needed by the first blockchain in the first network area, or a node capability needed by the first blockchain in the first network area.

8. The method according to claim 2, wherein the second indication information comprises at least one of the following: a quantity of first nodes, a type of the first node, or node information of one or more third nodes, wherein the third node is a node that is in the one or more first nodes and that communicates with a node configured to establish the first blockchain in a network area other than the first network area.

9. The method according to claim 8, wherein the node information of the third node comprises at least one of the following: an identifier of the third node on the first blockchain, an internet protocol IP address of the third node, public key information of the third node, certificate information of the third node, or a type of the third node on the first blockchain.

10. A blockchain establishment method, wherein the method comprises:
receiving, by a second ledger anchor function LAF network element, first indication information from a first LAF network element, wherein the first indication information indicates a requirement of a first blockchain in a first network area, and the second LAF network element is an LAF network element corresponding to the first network area; and
determining, by the second LAF network element based on the first indication information in the first network area, one or more first nodes configured to establish the first blockchain.

11. The method according to claim 10, wherein the method further comprises:
sending, by the second LAF network element, second indication information to the first LAF network element, wherein the second indication information indicates the one or more first nodes configured to establish the first blockchain in the first network area.

12. The method according to claim 10 or 11, wherein the method further comprises:
receiving, by the second LAF network element, a first configuration request from the first LAF network element, wherein the first configuration request comprises information about one or more second nodes, the second node is configured to communicate with the one or more first nodes, and the second node is a node in a network area other than the first network area and is configured to establish the first blockchain.

13. The method according to claim 12, wherein the method further comprises:
sending, by the second LAF network element, a first configuration response to the first LAF network element, wherein the first configuration response notifies a cross-domain communication configuration result of the one or more first nodes.

14. The method according to any one of claims 10 to 13, wherein the method further comprises:
sending, by the second LAF network element, a second configuration request to the first node, wherein the second configuration request is used to configure and activate a blockchain capability of the first node.

15. The method according to claim 14, wherein the method further comprises:
receiving, by the second LAF network element, a second configuration response from the first node, wherein the second configuration response notifies a blockchain capability configuration result of the first node.

16. The method according to any one of claims 10 to 15, wherein the method further comprises:
sending, by the second LAF network element, a third configuration request to a fourth node, wherein the third configuration request comprises information about one or more first nodes other than the fourth node in the plurality of first nodes, the fourth node is any one of the plurality of first nodes, and the information about the one or more first nodes other than the fourth node in the plurality of first nodes is used by the fourth node to communicate with the one or more first nodes other than the fourth node in the plurality of first nodes.

17. The method according to claim 16, wherein the method further comprises:
receiving, by the second LAF, a third configuration response from the fourth node, wherein the third configuration response notifies an intra-domain communication configuration result of the fourth node.

18. The method according to any one of claims 10 to 17, wherein the method further comprises:
sending, by the second LAF network element, third indication information to the first LAF network element, wherein the third indication information indicates a blockchain capability in the first network area.

19. The method according to any one of claims 10 to 18, wherein the method further comprises:
receiving, by the second LAF network element, fourth indication information from the first LAF network element, wherein the fourth indication information indicates the second LAF network element to deploy a blockchain capability for one or more fifth nodes in the first network area, and the fifth node is a node that does not have a blockchain capability in the first network area.

20. The method according to any one of claims 10 to 18, wherein the method further comprises:
receiving, by the second LAF network element, a first request from a fifth node, wherein the first request is used to request the second LAF network element to deploy a blockchain capability, and the fifth node is a node that does not have a blockchain capability in the first network area.

21. The method according to any one of claims 10 to 20, wherein the method further comprises:
sending, by the second LAF network element, first information to the fifth node, wherein the first information is used by the fifth node to deploy a blockchain capability, and the fifth node is a node that does not have a blockchain capability in the first network area.

22. The method according to any one of claims 10 to 21, wherein the first indication information comprises at least one of the following: a quantity of nodes needed by the first blockchain in the first network area, a node type needed by the first blockchain in the first network area, or a node capability needed by the first blockchain in the first network area.

23. The method according to claim 11, wherein the second indication information comprises at least one of the following: a quantity of first nodes, a type of the first node, or node information of one or more third nodes, wherein the third node is a node that is in the one or more first nodes and that communicates with a node configured to establish the first blockchain in a network area other than the first network area.

24. The method according to claim 23, wherein the node information of the third node comprises at least one of the following: an identifier of the third node on the first blockchain, an internet protocol IP address of the third node, public key information of the third node, certificate information of the third node, or a type of the third node on the first blockchain.

25. A blockchain establishment method, wherein the method comprises:
obtaining, by a third ledger anchor function LAF network element, first chain establishment requirement information of a first blockchain, wherein the third LAF network element is one of N LAF network elements that jointly create the first blockchain, and N is a positive integer greater than 1; and
sending, by the third LAF network element according to a blockchain creation policy, a second chain establishment requirement information to at least one LAF network element other than the third LAF network element in the N LAF network elements.

26. The method according to claim 25, wherein the obtaining, by a third LAF network element, first chain establishment requirement information of a first blockchain comprises: receiving, by the third LAF network element, the first chain establishment requirement information of the first blockchain from a first LAF network element, wherein the first LAF network element is configured to manage the N LAF network elements.

27. The method according to claim 25 or 26, wherein the second chain establishment requirement information is the first chain establishment requirement information.

28. The method according to claim 27, wherein the blockchain creation policy is that each of the N LAF network elements selects equivalent chain establishment requirement information from the first chain establishment requirement information to create a blockchain.

29. The method according to claim 27, wherein the sending, by the third LAF network element according to a blockchain creation policy, a second chain establishment requirement information to at least one LAF network element other than the third LAF network element in the N LAF network elements comprises: sending, by the third LAF network element, the second chain establishment requirement information to a fourth LAF network element according to the blockchain creation policy, wherein the fourth LAF network element is an LAF network element that preferentially selects chain establishment requirement information from the first chain establishment requirement information in the N LAF network elements.

30. The method according to claim 25 or 26, wherein the second chain establishment requirement information is chain establishment requirement information other than third chain establishment requirement information in the first chain establishment requirement information, and the third chain establishment requirement information is some chain establishment requirement information selected by the third LAF network element from the first chain establishment requirement information according to the blockchain creation policy.

31. The method according to claim 30, wherein the sending, by the third LAF network element according to a blockchain creation policy, a second chain establishment requirement information to at least one LAF network element other than the third LAF network element in the N LAF network elements comprises:
sending, by the third LAF network element, the second chain establishment requirement information to a fifth LAF network element according to the blockchain creation policy, wherein the fifth LAF network element is a next LAF network element that selects chain establishment requirement information in the N LAF network elements.

32. The method according to claim 29 or 31, wherein the blockchain creation policy is creating a blockchain in a sequence of capabilities of LAF network elements or creating a blockchain based on a blockchain capability in a network area corresponding to an LAF network element.

33. The method according to any one of claims 25 to 32, wherein the blockchain creation policy is preconfigured by an operator, is obtained by the N LAF network elements through negotiation, is generated based on a blockchain consensus, or is determined based on a common operation.

34. A communication apparatus, wherein the communication apparatus is configured to perform the method according to any one of claims 1 to 33.

35. A communication apparatus, wherein the apparatus comprises a processing module and a transceiver module, the processing module is configured to perform a processing function in the method according to any one of claims 1 to 33, and the transceiver module is configured to perform a transceiver function in the method according to any one of claims 1 to 33.

36. A communication apparatus, comprising a processor, wherein the processor is coupled to a memory, and the processor is configured to execute the computer program stored in the memory, to enable the communication apparatus to perform the method according to any one of claims 1 to 33.

37. A communication apparatus, wherein the communication apparatus comprises a processor and a transceiver, the transceiver is configured to exchange information between the communication apparatus and another communication apparatus, and the processor executes program instructions, to enable the communication apparatus to perform the method according to any one of claims 1 to 33.

38. A computer-readable storage medium, wherein the computer-readable storage medium stores a computer program or instructions, and when the computer program or the instructions are run on a computer, the computer is enabled to perform the method according to any one of claims 1 to 33.

39. A computer program product, wherein the computer program product comprises a computer program or instructions, and when the computer program or the instructions are run on a computer, the computer is enabled to perform the method according to any one of claims 1 to 33.

40. A communication system, wherein the communication system comprises a first ledger anchor function LAF network element and a second LAF network element, wherein
the first LAF network element obtains chain establishment requirement information of a first blockchain, and sends first indication information to the second LAF network element, wherein the first indication information is determined based on the chain establishment requirement information, the first indication information indicates a requirement of the first blockchain in a first network area, and the second LAF network element is an LAF network element corresponding to the first network area; and
the second LAF network element receives the first indication information from the first LAF network element, and determines, based on the first indication information in the first network area, one or more first nodes configured to establish the first blockchain.
